# EUROPEAN PATENT SPECIFICATION

(11) **EP 2 924 376 B1**
(45) Date of publication and mention of the grant of the patent: **28.06.2017**
(21) Application number: 13856262.4
(22) Date of filing: 22.11.2013
(51) Int. Cl.: F25D 11/00, F25D 29/00, F25D 17/04, G05D 23/19

(54) **REFRIGERATION DEVICE FOR CONTAINER**
KÜHLVORRICHTUNG FÜR EINEN CONTAINER
DISPOSITIF DE RÉFRIGÉRATION POUR CONTENANT

(30) Priority: 22.11.2012 JP 2012256856
(43) Date of publication of application: 30.09.2015
(73) Proprietor: Daikin Industries, Ltd., Osaka-shi, Osaka 530-8323 (JP)
(72) Inventor: SATOU, Kiichirou, Kita-ku, Osaka-shi Osaka 530-8323 (JP); UENO, Akitoshi, Kita-ku, Osaka-shi Osaka 530-8323 (JP)
(74) Representative: Hoffmann Eitle
(86) International application number: PCT/JP2013/006892
(87) International publication number: WO 2014/080637

(56) References cited:
- JP-A- H1 151 544
- JP-A- H1 163 769
- JP-A- H09 189 477
- JP-U- H0 640 845
- JP-U- S5 988 315
- US-A- 5 493 870
- US-A1- 2006 042 296

## Description

### TECHNICAL FIELD

The present invention relates to a container refrigeration device (a refrigeration device for container), and in particular, to a measure for preventing chilling injury.

### BACKGROUND ART

Container refrigeration devices have been used in the art to cool the inside of containers for marine transportation and other purposes. Patent Document 1 describes a container refrigeration device equipped with a refrigerant circuit which includes a compressor, a condenser, a receiver, an electronic expansion valve, and an evaporator that are sequentially connected together. This container refrigeration device further includes a heat exchanger for heating (a heating device) which is provided on the leeward side of the evaporator in the refrigerant circuit. The heat exchanger for heating is configured to allow a gaseous refrigerant discharged from the compressor to flow therethrough. The container refrigeration device performs, in a switchable manner, a cooling operation in which the air that has been sucked from inside of the container is cooled by the evaporator, and a dehumidifying operation in which the air that has been sucked from inside of container is cooled and dehumidified by the evaporator, and then, heated by the heat exchanger for heating.

Patent Document 2 discloses a refrigeration device for a vehicle using the same air flow arrangement as patent document 1 and additionally prevents excessively low temperatures at the evaporator to avoid ice build-up on it.

### CITATION LIST

PATENT DOCUMENT 1: Japanese Unexamined Patent Publication No. H11-63769
PATENT DOCUMENT 2: US 5 493 870 A

### SUMMARY OF THE INVENTION

### TECHNICAL PROBLEM

Meanwhile, in the container refrigeration device as described above, the air that has been sucked from inside of the container passes through the evaporator and the heating device (for example, the heat exchanger for heating), and then, is blown back into the inside of the container through an air outlet extending in the width direction inside of the container. A blown air temperature sensor for detecting the temperature of the air that is being blown through the air outlet (i.e., blown air) is provided at a point of the air outlet. During each of the cooling operation and the dehumidifying operation, temperature control is performed such that the temperature of the blown air detected by the blown air temperature sensor (hereinafter referred to as a "detected blown air temperature") becomes equal to a predetermined preset inside temperature.

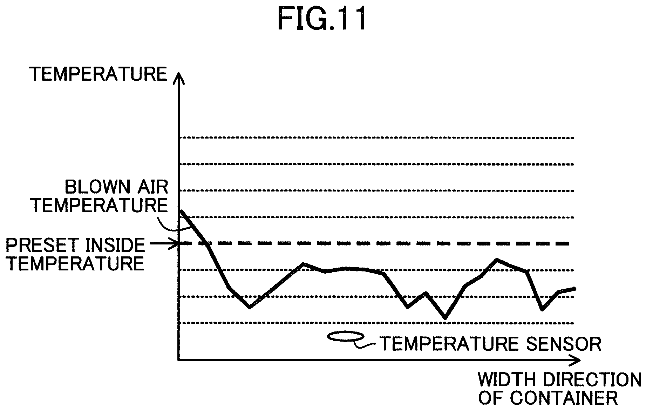

While the container refrigeration device as described above is performing the dehumidifying operation, however, the air passing through the heating device (i.e., the air that has been subjected to cooling and dehumidification in the evaporator) may not be uniformly heated with respect to the width direction inside of the container. For example, if the refrigerant which is present in the heat exchanger for heating has a non-uniform temperature distribution with respect to the width direction inside of the container, the air passing through the heat exchanger for heating is no longer heated uniformly with respect to the width direction inside of the container. Consequently, the air being blown out of the heat exchanger for heating has non-uniformity in temperature, as shown in FIG. 11. In such a case, once a switch is made from the cooling operation to the dehumidifying operation, it becomes difficult for the blown air temperature sensor to detect accurately the lowest temperature of the blown air with respect to the width direction inside of the container. Specifically, when the dehumidifying operation is being performed, the detected blown air temperature may be higher than the actual lowest temperature of the blown air with respect to the width direction inside of the container. Therefore, even if temperature control is performed during the dehumidifying operation such that the detected blown air temperature becomes equal to the preset inside temperature, the lowest temperature of the blown air with respect to the width direction inside of the container may become lower than the preset inside temperature, and consequently, may cause a load inside the container chilling injury.

It is therefore an object of the present invention to provide a container refrigeration device capable of preventing causing chilling injury to a load inside the container.

### SOLUTION TO THE PROBLEM

A first aspect of the present invention relates to a container refrigeration device including a cooling section (18) having: a refrigerant circuit (16) which includes a compressor (21), a condenser (23), an expansion mechanism (76), and an evaporator (25) that are sequentially connected together, and through which a refrigerant circulates; and a heating device (17) provided downstream of the evaporator (25) with respect to a direction in which sucked air that has been sucked from an inside of a container (C) flows. The cooling section (18) is configured to allow the sucked air to pass sequentially through the evaporator (25) and the heating device (17), and then, to be blown into the inside of the container (C). The container refrigeration device is configured to perform a cooling operation in which the heating device (17) is at rest and the sucked air is cooled by the evaporator (25), and a dehumidifying operation in which the sucked air is cooled and dehumidified by the evaporator (25) and then heated by the heating device (17). The container refrigeration device further includes a blown air temperature sensor (34) configured to detect a temperature of blown air which is being blown into the inside of the container (C) after having passed sequentially through the evaporator (25) and the heating device (17). The container refrigeration device further includes a temperature control section (101) configured to control, during the cooling and dehumidifying operations, the cooling section (18) such that a detected blown air temperature (Tss) which is a temperature of the blown air detected by the blown air temperature sensor (34) becomes equal to a predetermined target temperature (Tx). The container refrigeration device further includes a target control section (201). During the cooling operation, the target control section (201) sets the target temperature (Tx) to be a first preset temperature which is equal to a preset inside temperature (Tsp) that has been determined in advance with respect to an inside temperature of the container (C). Once a switch has been made from the cooling operation to the dehumidifying operation, the target control section (201) sets the target temperature (Tx) to be a second preset temperature which is the sum of the preset inside temperature (Tsp) and a predetermined target increment temperature.

According to the first aspect of the present invention, a cooling operation and a dehumidifying operation are performed. During each operation, a refrigerant circuit (16) of a cooling section (18) performs a refrigeration cycle in which a refrigerant discharged from a compressor (21) condensed by a condenser (23), expanded by an expansion mechanism (76), and then evaporated by an evaporator (25). During the cooling operation, sucked air that has been sucked from the inside of a container (C) exchanges heat with a refrigerant that is flowing through the evaporator (25) and is cooled, while flowing through the evaporator (25). During the cooling operation, a target control section (201) sets a target temperature (Tx) to be a first preset temperature that is equal to the preset inside temperature (Tsp). Therefore, during the cooling operation, a temperature control section (101) controls the cooling section (18) such that the detected blown air temperature (Tss) becomes equal to the first preset temperature that is equal to the preset inside temperature (Tsp).

In addition, according to the first aspect of the present invention, if a switch has been made from the cooling operation to the dehumidifying operation, the sucked air that has been sucked from inside of the container (C) exchanges, in the evaporator (25), heat with the refrigerant that is flowing through the evaporator (25) and is cooled to cause condensation (that is to say, the sucked air is cooled and dehumidified). Thereafter, when passing through a heating device (17), the sucked air is heated by the heating device (17). The target control section (201) sets the target temperature (Tx) to be a second preset temperature that is the sum of the preset inside temperature (Tsp) and a target increment temperature. Therefore, if a switch is made from the cooling operation to the dehumidifying operation, the temperature control section (101) controls the cooling section (18) such that the detected blown air temperature (Tss) becomes equal to the second preset temperature that is the sum of the preset inside temperature (Tsp) and the target increment temperature.

During the dehumidifying operation, the air passing through the heating device (17) (i.e., the air that has been cooled and dehumidified by the evaporator (25)) may not be uniformly heated with respect to the width direction inside of the container (C). In this case, the blown air that is being blown into the inside of the container (C) after having passed through the evaporator (25) and the heating device (17) may have non-uniformity in temperature, and consequently, the detected blown air temperature (Tss) may be higher than the lowest temperature of the blown air with respect to the width direction inside of the container (C). Thus, even if a temperature control is performed such that the detected blown air temperature (Tss) becomes equal to the preset inside temperature (Tsp) during the dehumidifying operation, the lowest temperature of the blown air with respect to the width direction inside of the container (C) may still become lower than the preset inside temperature (Tsp).

To address this problem, according to the first aspect of the present invention, once a switch has been made from the cooling operation to the dehumidifying operation, the target temperature (Tx) is set to be the second preset temperature (i.e., the sum of the preset inside temperature (Tsp) and the target increment temperature) that is higher than the preset inside temperature (Tsp). Therefore, the temperature of the blown air that is being blown into the inside of the container (C) can be raised on average. Consequently, the temperature of the blown air can also be raised with respect to the width direction inside of the container (C). As a result, even if the air that is passing through the heating device (17) is heated non-uniformly with respect to the width direction inside of the container (C), the lowest temperature of the blown air with respect to the width direction inside of the container (C) is not allowed to become lower than the preset inside temperature (Tsp).

A second aspect of the present invention is an embodiment of the container refrigeration device according to the first aspect, and further includes a sucked air temperature sensor (33) configured to detect a temperature of the sucked air. According to the second aspect, after a switch has been made from the cooling operation to the dehumidifying operation, the target control section (201) lowers the target temperature (Tx) if a detected sucked air temperature (Trs) which is the temperature of the sucked air detected by the sucked air temperature sensor (33) becomes higher than a predetermined reference sucked air temperature, and raises the target temperature (Tx) if the detected sucked air temperature (Trs) becomes lower than the reference sucked air temperature.

According to the second aspect of the present invention, the air which has passed through the evaporator (25) and the heating device (17) and has been blown into the inside of the container (C) circulates inside of the container (C) and is sucked again into the evaporator (25). Accordingly, a variation in the detected sucked air temperature (Trs) depends on a variation in the inside temperature of the container (C). Specifically, as the inside temperature of the container (C) rises, the temperature of sucked air also rises, which results in an increase in the detected sucked air temperature (Trs). Conversely, as the inside temperature of the container (C) falls, the temperature of sucked air also falls, which results in a decrease in the detected sucked air temperature (Trs). The target control section (201) corrects the target temperature (Tx) in accordance with the variation in the detected sucked air temperature (Trs) which has been caused after a switch has been made from the cooling operation to the dehumidifying operation. Specifically, if the inside temperature of the container (C) rises, after the switch from the cooling operation to the dehumidifying operation, so much that the detected sucked air temperature (Trs) becomes higher than the reference sucked air temperature, the target control section (201) lowers the target temperature (Tx). This leads to a decrease in the temperature of the blown air, and eventually, a decrease in the inside temperature of the container (C). On the other hand, if the inside temperature of the container (C) falls, after the switch from the cooling operation to the dehumidifying operation, so much that the detected sucked air temperature (Trs) becomes lower than the reference sucked air temperature, then the target control section (201) raises the target temperature (Tx). This leads to an increase in the temperature of the blown air, and eventually, an increase in the inside temperature of the container (C). Thus, by controlling the temperature of the blown air in accordance with such a variation in the detected sucked air temperature (Trs) (specifically, the results of comparison between the detected sucked air temperature (Trs) and the reference sucked air temperature) after the switch from the cooling operation to the dehumidifying operation, a variation in the inside temperature of the container (C), involved with the switch from the cooling operation to the dehumidifying operation, can be reduced.

A third aspect of the present invention is an embodiment of the container refrigeration device according to the second aspect. According to the third aspect, the reference sucked air temperature is set to be a stabilized sucked air temperature (Trs') which is the temperature of the sucked air detected by the sucked air temperature sensor (33) when the cooling operation is in a stabilized state, or to be a preset sucked air temperature which is the sum of the preset inside temperature (Tsp) and a predetermined sucked air increment temperature.

According to the third aspect of the present invention, after the switch from the cooling operation to the dehumidifying operation, the target control section (201) lowers the target temperature (Tx) if the detected sucked air temperature (Trs) becomes higher than the stabilized sucked air temperature (Trs') (or the preset sucked air temperature). On the other hand, the target control section (201) raises the target temperature (Tx) if the detected sucked air temperature (Trs) becomes lower than the stabilized sucked air temperature (Trs') (or the preset sucked air temperature). Thus, by reference to the stabilized sucked air temperature (Trs') or the preset sucked air temperature, a determination can be made whether or not any variation has been caused in the detected sucked air temperature (Trs) due to a variation in the inside temperature of the container (C) after the switch from the cooling operation to the dehumidifying operation.

A fourth aspect of the present invention is an embodiment of the container refrigeration device according to any one of the first to third aspects. According to the fourth aspect, during the dehumidifying operation, the target control section (201) corrects the target temperature (Tx) in accordance with dehumidifying capacity of the evaporator (25) such that the target temperature (Tx) rises as the dehumidifying capacity of the evaporator (25) increases.

According to the fourth aspect of the present invention, the evaporator (25) cools the air and causes the air to condense, thereby dehumidifying the air. Specifically, during the dehumidifying operation, the temperature of the blown air tends to fall more easily as the dehumidifying capacity (the cooling capacity) of the evaporator (25) increases. Therefore, the target temperature (Tx) is corrected in accordance with the dehumidifying capacity of the evaporator (25) during the dehumidifying operation such that the target temperature (Tx) rises as the dehumidifying capacity of the evaporator (25) increases, thereby raising the temperature of the blown air if the temperature of the blown air tends to fall easily during the dehumidifying operation.

A fifth aspect of the present invention is an embodiment of the container refrigeration device according to any one of the second to fourth aspects. According to the fifth aspect, the target control section (201) corrects the target temperature (Tx) such that the target temperature (Tx) becomes equal to or higher than the preset inside temperature (Tsp).

According to the fifth aspect of the present invention, the lower limit of the target temperature (Tx) is set to be the preset inside temperature (Tsp). This can prevent the temperature of the blown air from falling excessively, and consequently, the inside temperature of the container (C) from falling excessively.

A sixth aspect of the present invention is an embodiment of the container refrigeration device according to any one of the first to fifth aspects. According to the sixth aspect, the heating device (17) is implemented as a reheat heat exchanger (32) into which part of the refrigerant discharged from the compressor (21) flows during the dehumidifying operation.

According to the sixth aspect of the present invention, during the dehumidifying operation, part of the refrigerant discharged from the compressor (21) flows into the reheat heat exchanger (32), whereas the rest of the refrigerant circulates through the refrigerant circuit (16), and then, enters the evaporator (25). The air that is passing through the evaporator (25) is cooled by exchanging heat with the refrigerant that is flowing through the evaporator (25), and condensation occurs (i.e., the air is cooled and dehumidified). On the other hand, air that is passing through the reheat heat exchanger (32) is heated by exchanging heat with the refrigerant that is flowing through the reheat heat exchanger (32). In this manner, during the dehumidifying operation, the sucked air that has been sucked from inside of the container (C) can be cooled and dehumidified by the evaporator (25), and then heated by the reheat heat exchanger (32).

A seventh aspect of the present invention is an embodiment of to the container refrigeration device of the sixth aspect, and further includes an operation control section (105) configured to perform a first dehumidifying control or a second dehumidifying control when the dehumidifying operation is being performed. According the seventh aspect, the first dehumidifying control is performed to allow part of the refrigerant discharged from the compressor (21) to flow into the reheat heat exchanger (32), whereas the second dehumidifying control is performed to allow part of the refrigerant discharged from the compressor (21) to flow into the reheat heat exchanger (32) and to control the cooling section (18) such that a discharge pressure of the compressor (21) becomes higher during the second dehumidifying control than during the first dehumidifying control.

According to the seventh aspect of the present invention, first and second dehumidifying controls are performed. When the first dehumidifying control is being performed, part of the refrigerant discharged from the compressor (21) flows into the reheat heat exchanger (32) whereas the rest of the refrigerant circulates through the refrigerant circuit (16) and enters the evaporator (25). In this manner, the sucked air that has been sucked from inside of the container (C) can be cooled and dehumidified by the evaporator (25), and then heated by the reheat heat exchanger (32). When the second dehumidifying control is being performed, on the other hand, the heating capacity of the reheat heat exchanger (32) can be increased by controlling the cooling section (18) such that the discharge pressure of the compressor (21) becomes higher during the second dehumidifying control than during the first dehumidifying control. The increase in the heating capacity of the reheat heat exchanger (32) causes the temperature of the blown air to rise, which makes the detected blown air temperature (Tss) higher than the target temperature (Tx). Therefore, the temperature control section (101) controls the cooling section (18) to lower the detected blown air temperature (Tss), and thereby increases the cooling capacity of the evaporator (25). For example, the temperature control section (101) increases the flow rate of the refrigerant that circulates through the refrigerant circuit (16) of the cooling section (18) to increase the cooling capacity of the evaporator (25). In this manner, the temperature of the blown air can be lowered, and consequently, the detected blown air temperature (Tss) can be lowered toward the target temperature (Tx). Further, the dehumidifying capacity of the evaporator (25) can be increased by increasing the cooling capacity of the evaporator (25).

An eighth aspect of the present invention is an embodiment of the container refrigeration device of any one of the first to fifth aspects. According to the eighth aspect, the heating device (17) is implemented as an electric heater (78).

According to the eighth aspect of the present invention, during the dehumidifying operation, the air that is passing through the evaporator (25) is cooled by exchanging heat with the refrigerant that is passing through the evaporator (25), and condensation occurs (i.e., the air is cooled and dehumidified). On the other hand, when passing through the electric heater (78), the air is heated by the electric heater (78). In this manner, during the dehumidifying operation, the sucked air that has been sucked from inside of the container (C) can be cooled and dehumidified by the evaporator (25), and then heated by the electric heater (78).

A ninth aspect of the present invention is an embodiment of the container refrigeration device of the eighth aspect, and further includes an operation control section (105) configured to perform a first dehumidifying control or a second dehumidifying control when the dehumidifying operation is being performed. According to the ninth aspect, the first dehumidifying control is performed to drive the electric heater (78), whereas the second dehumidifying control is performed to drive the electric heater (78) with the heating capacity of the electric heater (78) set to be higher than the heating capacity during the first dehumidifying control.

According to the ninth aspect of the present invention, first and second dehumidifying controls are performed. When the first dehumidifying control is being performed, the sucked air that has been sucked from inside of the container (C) can be cooled and dehumidified by the evaporator (25), and then heated by the electric heater (78). When the second dehumidifying control is being performed, on the other hand, the heating capacity of the electric heater (78) is set to be higher than the capacity during the first dehumidifying control, thereby increasing the heating capacity of the electric heater (78). The increase in the heating capacity of the electric heater (78) causes the temperature of the blown air to rise, which makes the detected blown air temperature (Tss) higher than the target temperature (Tx). Therefore, the temperature control section (101) controls the cooling section (18) to lower the detected blown air temperature (Tss), and thereby increases the cooling capacity of the evaporator (25). In this manner, the temperature of the blown air can be lowered, and consequently, the detected blown air temperature (Tss) can be lowered toward the target temperature (Tx). Further, the dehumidifying capacity of the evaporator (25) can be increased by increasing the cooling capacity of the evaporator (25).

### ADVANTAGES OF THE INVENTION

According to the first aspect of the present invention, once a switch has been made from the cooling operation to the dehumidifying operation, the target temperature (Tx) is set to be the second preset temperature (i.e., the sum of the preset inside temperature (Tsp) and the target increment temperature). In this manner, even if the air that is passing through the heating device (17) is heated non-uniformly with respect to the width direction inside of the container (C), the lowest temperature of the blown air with respect to the width direction inside of the container (C) is not allowed to become lower than the preset inside temperature (Tsp). As a result, chilling injury to a load inside the container (C) can be prevented.

According to the second and third aspects of the present invention, the target temperature (Tx) is corrected in accordance with a variation in the detected sucked air temperature (Trs) after the switch has been made from the cooling operation to the dehumidifying operation. This enables reduction of a variation in the inside temperature of the container (C) involved with the switch from the cooling operation to the dehumidifying operation. Therefore, during the dehumidifying operation, chilling injury to a load inside the container (C) and an increase in the inside temperature of the container (C) can be prevented.

According to the fourth aspect of the present invention, during the dehumidifying operation, the target temperature (Tx) is corrected in accordance with the dehumidifying capacity of the evaporator (25), thereby raising the temperature of the blown air if the temperature of the blown air tends to fall easily during the dehumidifying operation. Thus, the inside temperature of the container (C) can be prevented from falling even if the dehumidifying capacity rises in the evaporator (25).

According to the fifth aspect of the present invention, the lower limit of the target temperature (Tx) is set to be the preset inside temperature (Tsp). This can prevent the inside temperature of the container (C) from falling excessively, thereby ensuring that the load inside container (C) does not suffer chilling injury during the dehumidifying operation.

According to the sixth aspect of the present invention, during the dehumidifying operation, the sucked air that has been sucked from inside of the container (C) can be cooled and dehumidified by the evaporator (25), and then heated by the reheat heat exchanger (32). Therefore, the air inside of the container (C) can be dehumidified with the inside temperature of the container (C) prevented from falling.

According to the seventh aspect of the present invention, when the second dehumidifying control is being performed, the dehumidifying capacity of the evaporator (25) can be increased by increasing the cooling capacity of evaporator (25) as the heating capacity of the reheat heat exchanger (32) increases such that the detected blown air temperature (Tss) becomes equal to the target temperature (Tx). Therefore, reduction of a variation in the inside temperature of the container (C) and the increase in the dehumidifying capacity of the evaporator (25) can be achieved.

According to the eighth aspect of the present invention, during the dehumidifying operation, sucked air that has been sucked form inside of the container (C) can be cooled and dehumidified by the evaporator (25), and then heated by the electric heater (78). Therefore, the air inside of the container (C) can be dehumidified with the inside temperature of the container (C) prevented from falling.

According to the ninth aspect of the present invention, when the second dehumidifying control is being performed, the dehumidifying capacity of the evaporator (25) can be increased by increasing the cooling capacity of evaporator (25) as the heating capacity of the electric heater (78) increases such that the detected blown air temperature (Tss) becomes equal to the target temperature (Tx). Therefore, reduction of a variation in the inside temperature of the container (C) and the increase in the dehumidifying capacity of the evaporator (25) can be achieved.

### BRIEF DESCRIPTION OF THE DRAWINGS

[FIG. 1] FIG. 1 is a perspective view of a container refrigeration device according to a first embodiment, as viewed from outside of the container.
[FIG. 2] FIG. 2 is a cross-sectional view showing a configuration of the container refrigeration device of the first embodiment.
[FIG. 3] FIG. 3 is a front view of a casing of the first embodiment, as viewed from inside of the container.
[FIG. 4] FIG. 4 is a piping system diagram showing a cooling section of the container refrigeration device of the first embodiment.
[FIG. 5] FIG. 5 is a state transition diagram showing a cooling operation and a dehumidifying operation of the first embodiment.
[FIG. 6] FIG. 6 shows first to third dehumidifying controls of the dehumidifying operation according to the first embodiment.
[FIG. 7] FIGS. 7A and 7B show how a first correction section of the first embodiment operates. FIG. 7A shows an example of correction by which a target temperature is lowered. FIG. 7B shows an example of correction by which the target temperature is raised.
[FIG. 8] FIG. 8 is a graph showing time-temperature relations during the cooling and dehumidifying operations of the first embodiment.
[FIG. 9] FIG. 9 is a graph showing a relation between the width direction inside of the container and temperature during the dehumidifying operation of the first embodiment.

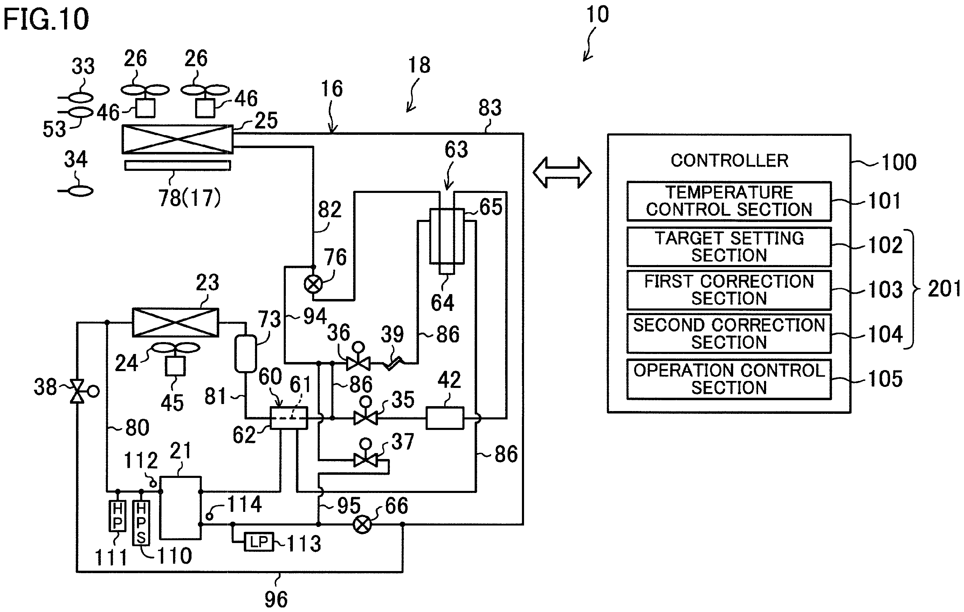

[FIG. 10] FIG. 10 is a piping system diagram showing a cooling section of a container refrigeration device of a third embodiment.
[FIG. 11] FIG. 11 is a graph showing a relation between the width direction inside of the container and temperature during a dehumidifying operation of a conventional container refrigeration device.

### DESCRIPTION OF EMBODIMENTS

Embodiments will now be described in detail with reference to the drawings. In the drawings, like reference characters are used to denote identical or equivalent components, and description thereof will not be repeated herein.

### [First Embodiment]

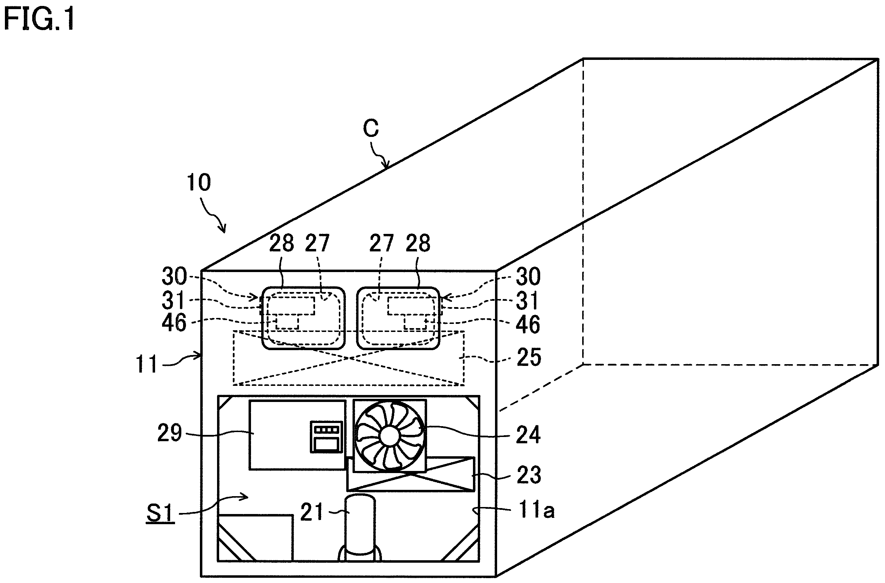

As shown in FIGS. 1 to 3, a container refrigeration device (10) according to a first embodiment is configured to refrigerate or freeze a load inside a container (C) for use in marine transportation, for example. The container (C) is in a box shape, one side of which is open (or in a cylindrical shape having a bottom). The container refrigeration device (10) is installed such that the device closes the open end of the container (C). There is a load (not shown) to be cooled inside the container (C). Examples of the loads include perishable foods and precision electronic parts.

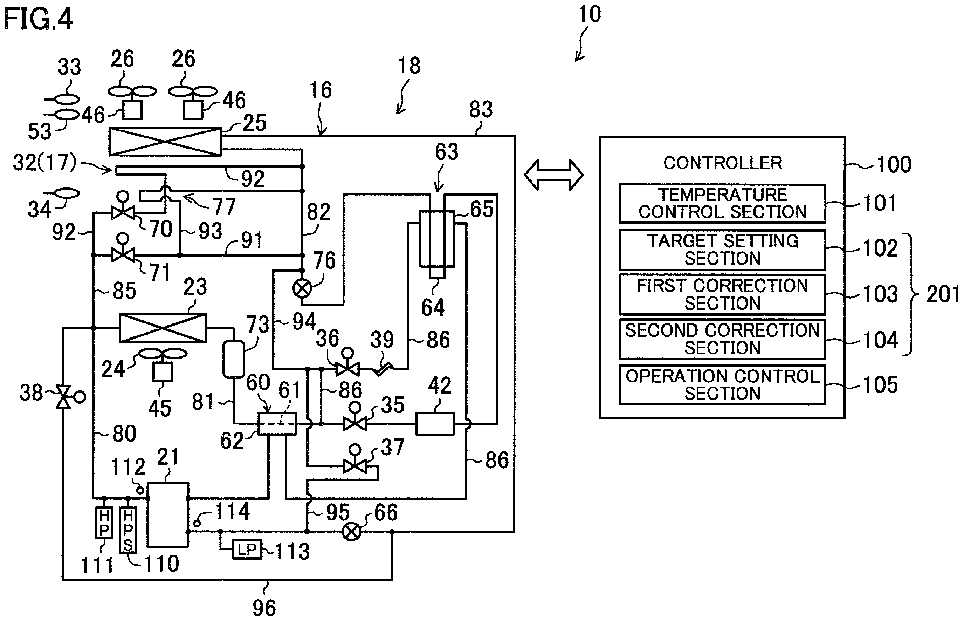

As shown in FIG. 4, the container refrigeration device (10) includes a controller (100), a cooling section (18) having a refrigerant circuit (16) and a heating device (17), a sucked air temperature sensor (33), a blown air temperature sensor (34), and a humidity sensor (53). The refrigerant circuit (16) is a closed circuit filled with a refrigerant. A compressor (21), a condenser (23), an expansion valve (76), and an evaporator (25) are sequentially connected together to form the refrigerant circuit (16).

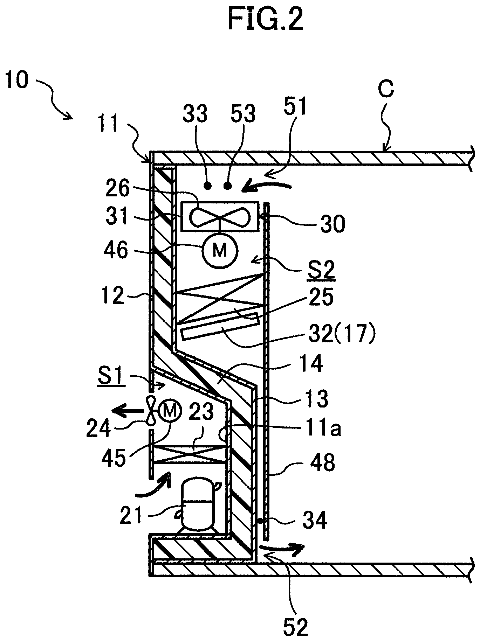

As shown in FIG. 2, in the cooling section (18), the heating device (17) is provided downstream of the evaporator (25) of the refrigerant circuit (16) with respect to the direction in which air sucked from inside of the container (C) (i.e., sucked air) flows. Specifically, in the cooling section (18), the sucked air passes sequentially through the evaporator (25) and the heating device (17), and then is blown into the inside of the container (C). In this embodiment, the heating device (17) is implemented as a reheat heat exchanger (32).

The container refrigeration device (10) is configured to cool the air inside the container (C) by using the refrigeration cycle that the refrigerant circuit (16) of the cooling section (18) performs. Specifically, the container refrigeration device (10) of this embodiment performs a cooling operation in which the heating device (17) is at rest and the sucked air is cooled by the evaporator (25), and a dehumidifying operation in which the sucked air is cooled and dehumidified by the evaporator (25), and then, heated by the heating device (17).

### <Structure of Container Refrigeration Device>

As shown in FIGS. 1 and 2, the container refrigeration device (10) includes a casing (11) of which the peripheral portion is attached to the container (C) such that the open end of the container (C) is closed. In this example, the cooling section (18) of the container refrigeration device (10) includes, in addition to the refrigerant circuit (16) and the heating device (17) (i.e. the reheat heat exchanger (32), in this example), an outer fan (24), an outer motor (45), and blower units (30).

As shown in FIG. 2, the casing (11) includes an outer casing (12) that faces the outside of the container (C) and an inner casing (13) that faces the inside of the container (C). The outer casing (12) and the inner casing (13) are metallic casings of an aluminum alloy. An insulation material (14) is provided in the space between the outer and inner casings (12 and 13).

The outer casing (12) is attached to the open end of the container (C) so as to close the open end. The outer casing (12) has a lower portion protruding toward the inside of the container (C). The inner casing (13) has been formed to run along the outer casing (12), and its lower portion also protrudes toward the inside of the container as well as the lower portion of the outer casing (12). Thus, the casing (11) has its lower portion protruding toward the inside of the container (C), and consequently, the lower portion of the casing (11) has a recess (11a) arranged outside of the container. That is to say, an outer storage space (S1) is formed in the lower portion of the casing (11) so as to face the outside of the container, and an inner storage space (S2) is formed in the upper portion of the casing (11) so as to face the inside of the container.

In addition, a partition plate (48) is provided closer to the inside of the container than the casing (11) is. The partition plate (48) which is a substantially rectangular plate member is arranged upright so as to face the casing (11) with a gap left between them. The inner storage space (S2) is separated by the partition plate (48) from inside of the container (C). A gap left between the upper edge of the partition plate (48) and the ceiling of the container (C) serves as an air inlet (51) through which the air inside of the container (C) is sucked into the inner storage space (S2). A gap left between the lower edge of the partition plate (48) and the bottom surface of the container (C) serves as an air outlet (52) through which the air treated by the container refrigeration device (10) (i.e., the air that has passed sequentially through the evaporator (25) and the heating device (17)) is blown into the inside of the container. Both lateral edges of the partition plate (48) in the width direction inside of the container (C) are fixed to the side surfaces of the container (C) which define the inner width of the container.

### <<Outer Storage Space>>

The outer storage space (S1) houses the compressor (21), the condenser (23), the outer fan (24), and the outer motor (45). The compressor (21) and the condenser (23) are connected to the refrigerant circuit (16). The outer motor (45) rotates the outer fan (24) that takes the air outside of the container into the outer storage space (S1) and blows the air toward the condenser (23). The outer motor (45) is configured to selectively start or stop operating (start/stop) in response to a control by the controller (100). That is to say, the start/stop of the outer fan (24) is controlled by the controller (100). In the condenser (23), the air sucked from outside of the container (C) exchanges heat with the refrigerant.

### <<Inner Storage Space>>

The inner storage space (S2) houses, in its upper portion located closer to the inside of the container than the casing (11) is, the reheat heat exchanger (32), the evaporator (25), the blower unites (30), the sucked air temperature sensor (33), and the humidity sensor (53). The inner storage space (S2) further houses the blown air temperature sensor (34) in its lower portion located closer to the inside of the container than the casing (11) is. Specifically, in the inner storage space (S2), the sucked air temperature sensor (33) and the humidity sensor (53) are arranged in an upper portion closest to the air inlet (51) (i.e., in the vicinity of the air inlet (51)). The blower units (30) are arranged immediately under the sucked air temperature sensor (33). The evaporator (25) is arranged immediately under the blower units (30). The reheat heat exchanger (32) is arranged immediately under the evaporator (25). The blown air temperature sensor (34) is arranged in a lower portion closest to the air outlet (52) (i.e., in the vicinity of the air outlet (52)).

### - Blower Units -

The blower units (30) blow the air inside of the container (C) to the inner storage space (S2) (specifically, to the evaporator (25) and the reheat heat exchanger (32)). The blower units (30) are arranged in the upper portion of the inner storage space (S2) and aligned side by side in the width direction of the casing (11). Each blower unit (30) includes a fan housing (31), an inner fan (26), and an inner motor (46). The inner motor (46) rotates the inner fan (26) that takes in the air inside of the container (C) through the air inlet (51) located over the partition plate (48) and blows the air to the inner storage space (S2) (specifically, to the evaporator (25) and reheat heat exchanger (32)). The inner motor (46) is configured to selectively start or stop operating (star/stop) in response to a control by the controller (100). That is to say, the start/stop of the inner fan (26) is controlled by the controller (100). The air (sucked air) that the inner fans (26) have sucked from inside of the container (C) passes sequentially through the evaporator (25) and the reheat heat exchanger (32). Thereafter, the air is blown into the inside of the container (C) through the air outlet (52) located under the partition plate (48). In other words, the reheat heat exchanger (32) is arranged downstream of the evaporator (25) with respect to the direction in which the air sucked from inside of the container (C) flows.

### -Sucked Air Temperature Sensor-

The sucked air temperature sensor (33) is configured to detect the temperature of the sucked air which is being sucked from inside of the container (C) (i.e., the air which is being blown from inside of the container (C) to the inner storage space (S2)). In this example, the sucked air temperature sensor (33) is arranged between the two blower units (30, 30) such that the sensor (33) is substantially level with the top of the blower units (30). The temperature of the sucked air detected by the sucked air temperature sensor (33) (hereinafter, referred to as the detected sucked air temperature (Trs)) is transmitted to the controller (100).

### -Blown Air Temperature Sensor-

The blown air temperature sensor (34) is configured to detect the temperature of the air which is being blown into the inside of the container (C) from the inner storage space (S2) (i.e. the blown air). Specifically, the blown air temperature sensor (34) is configured to detect the temperature of the blown air that is being blown into the inside of the container (C) after having passed sequentially through the evaporator (25) and the reheat heat exchanger (32). In this example, the blown air temperature sensor (34) is arranged between the lower portion of the inner storage space (S2) (i.e., the protruding portion of the inner casing (13)) and the partition plate (48) and substantially at a middle of the width inside of the container. The temperature of the blown air detected by the blown air temperature sensor (34) (hereinafter, referred to as the detected blown air temperature (Tss)) is transmitted to the controller (100).

### - Humidity Sensor -

The humidity sensor (53) is configured to detect the humidity of the sucked air that is being sucked from inside of the container (C). The humidity of the sucked air detected by the humidity sensor (53) (hereinafter, referred to as the detected sucked air humidity) is transmitted to the controller (100).

### <<Other Components of Container Refrigeration Device>>

As shown in FIG. 1, the casing (11) has two openings (27) arranged in line side by side in the width direction near the upper edge of the casing (11). A door (28) which is opened or closed for doing maintenance is attached to each opening (27). In the outer storage space (S1) of the casing (11), an electric component box (29) is provided adjacent to the outer fan (24).

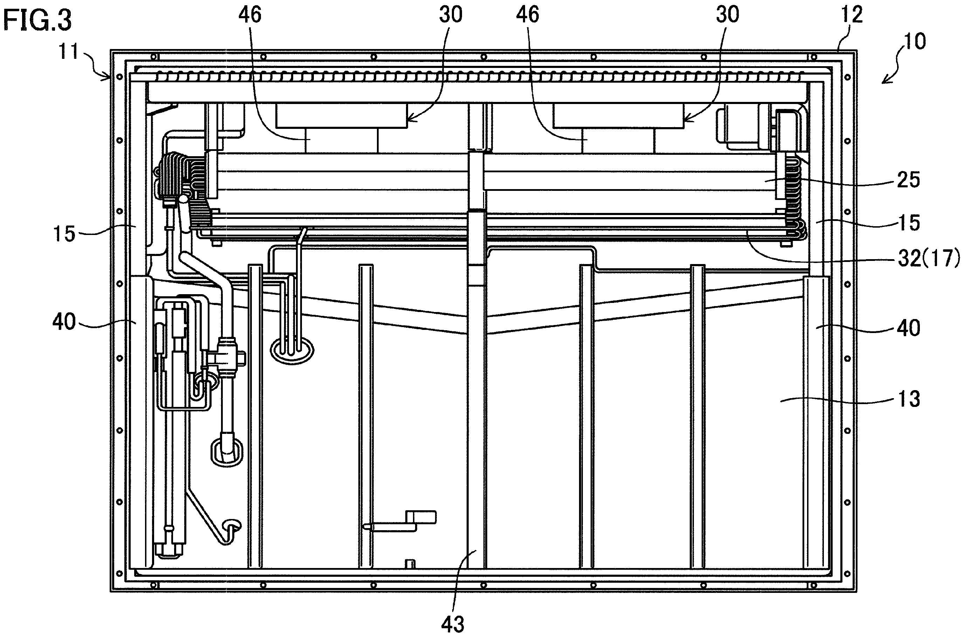

As shown in FIG. 3, in the upper portion of the casing (11), an evaporator retainer frame (15) is provided so as to face the inside of the container. The evaporator retainer frame (15) extends in the width direction of the casing (11) and retains the evaporator (25). Further, in the casing (11), side stays (40) and a frame support member (43) are provided so as to face the inside of the container. The side stays (40) are arranged to stand upright near both lateral ends of the casing (11) in the width direction of the casing (11), and connected to the lower portion of the casing (11) protruding toward the inside of the container. The frame support member (43) is a column member having a substantially U-shaped cross section, and provided so as to face the inside of the container in the lower portion of the casing (11). The frame support member (43) vertically extends along the centerline with respect to the width of the casing (11). The evaporator retainer frame (15) is supported by the side stays (40) at both of the lateral ends in the width direction and by the frame support member (43) at the middle of the width. Specifically, the middle of the width of the evaporator retainer frame (15) is fixed to the middle of the width of the casing (11) to face the inside of the container, and connected to the top end of the frame support member (43).

### <Configuration of Refrigerant Circuit>

As shown in FIG. 4, in the refrigerant circuit (16), the compressor (21), the condenser (23), the expansion valve (76), and the evaporator (25) are sequentially connected by means of refrigerant pipes. In this embodiment, a high-pressure liquid pipe (81) is provided between the condenser (23) and the expansion valve (76). A low-pressure liquid pipe (82) is provided between the expansion valve (76) and the evaporator (25). A low-pressure gas pipe (83) is provided between the evaporator (25) and the compressor (21). The outer fan (24) configured to blow the air outside of the container (C) to the condenser (23) is provided near the condenser (23). The inner fans (26) configured to blow the air inside the container (C) to the evaporator (25) are provided near the evaporator (25). The high-pressure liquid pipe (81) is provided with the receiver (73), a first subcooling heat exchanger (60), a first on-off valve (35), a dryer (42), and a second subcooling heat exchanger (63), which are arranged in this order. The low-pressure gas pipe (83) is provided with a suction proportional valve (66).

### <<Compressor>>

The compressor (21) compresses the refrigerant and discharges the compressed refrigerant. The compressor (21) is configured to selectively start or stop operating in response to a control by the controller (100). In this embodiment, the compressor (21) includes a compression mechanism (not shown) and a compressor motor (not shown) for driving the compression mechanism. The compressor motor has a constant revolution speed. That is to say, the compressor motor is configured to operate at the constant revolution speed

### <<Condenser>>

The condenser (23) is configured to allow the refrigerant discharged from the compressor (21) to flow into itself, and to cause the refrigerant that has flowed into itself to dissipate heat into the air (i.e., the air outside of the container, in this example) which is passing through the condenser (23), thereby allowing the refrigerant to condense. In other words, in the condenser (23), the refrigerant flowing through the condenser (23) exchanges heat with the air passing through condenser (23), and consequently, the refrigerant flowing through the condenser (23) is allowed to condense, while the air passing through the condenser (23) is heated. For example, the condenser (23) may be a heat exchanger which includes circular heat transfer tubes (a so-called fin-and-tube heat exchanger of a cross fin tube type).

### <<Receiver>>

The receiver (73) is provided downstream of the condenser (23) with respect to the direction in which the refrigerant flows (i.e., the direction in which the refrigerant flows in the refrigerant circuit (16)). The receiver (73) is configured to separate the refrigerant that has flowed into itself from the condenser (23) into a saturated liquid and a saturated gas, and to make the saturated liquid flow out. For example, the receiver (73) may be implemented as an elongated cylindrical hermetic vessel.

### <<First Subcooling Heat Exchanger>>

The first subcooling heat exchanger (60) includes a first high-pressure side channel (61) and a first low-pressure side channel (62). The first high-pressure side channel (61) of the first subcooling heat exchanger (60) is provided downstream of the receiver (73) with respect to the direction of in which the refrigerant flows.

### <<First On-off Valve>>

The first on-off valve (35) is configured to regulate the flow rate of the refrigerant which is flowing through the high-pressure liquid pipe (81) between the dryer (42) and the expansion valve (76). The opening degree of the first on-off valve (35) is adjustable in response to a control by the controller (100).

### <<Dryer>>

The dryer (42) is provided downstream of the first on-off valve (35) with respect to the direction in which the refrigerant flows. The dryer (42) is configured to capture the moisture contained in the liquid refrigerant which has flowed out of the condenser (23) (in this embodiment, the liquid refrigerant which has passed through the receiver (73), the first subcooling heat exchanger (60), and the first on-off valve (35)).

### <<Second Subcooling Heat Exchanger>>

The second subcooling heat exchanger (63) includes a second high-pressure side channel (64) and a second low-pressure side channel (65). The second high-pressure side channel (64) of the second subcooling heat exchanger (63) is provided downstream of the dryer (42) with respect to the direction in which the refrigerant flows.

### <<Expansion Valve (Expansion Mechanism)>>

The expansion valve (76) is configured to expand and decompress the refrigerant which is flowing inside itself. The opening degree of the expansion valve (76) is adjustable in response to a control by the controller (100).

### <<Evaporator>>

The evaporator (25) is configured to allow the refrigerant which has flowed out of the expansion valve (76) (and entered the low-pressure liquid pipe (82), in this example) to flow into itself. The evaporator (25) is configured to cool the air (specifically, the sucked air that has been sucked from inside of the container (C)) which is passing through the evaporator (25) by allowing the refrigerant that has entered the evaporator (25) to absorb heat from the air. In other words, in the evaporator (25), the refrigerant flowing through the evaporator (25) exchanges heat with the air passing through the evaporator (25), and consequently, the refrigerant flowing through the evaporator (25) evaporates, while the air passing through the evaporator (25) is cooled. For example, the evaporator (25) is a heat exchanger which includes circular heat transfer tubes (i.e., a so-called fin-and-tube heat exchanger of a cross fin tube type). The heat transfer tubes of the evaporator (25) extend in the width direction inside of the container (C).

### <<Suction Proportional Valve>>

The suction proportional valve (66) is configured to regulate the flow rate of the refrigerant which circulates through the refrigerant circuit (16). The opening degree of the suction proportional valve (66) is adjustable in response to the control by the controller (100). That is to say, the refrigerant circuit (16) is configured to regulate, in response to the control by the controller (100), the flow rate of the refrigerant that circulates.

### <<First Branch Pipe>>

A first branch pipe (85) is connected to a halfway point of the high-pressure gas pipe (80). Part of the refrigerant that flows through the high-pressure gas pipe (80) enters the first branch pipe (85). Further, first and second connection pipes (91, 92) branch off from the first branch pipe (85). In other words, the first branch pipe (85) has one end connected to the halfway point of the high-pressure gas pipe (80).

### <<First to Third Connection Pipes>>

The first connection pipe (91), of which one end is connected to the other end of the first branch pipe (85), has the other end connected to a halfway point of the low-pressure liquid pipe (82). The first connection pipe (91) is provided with a heater solenoid valve (71). The second connection pipe (92), of which one end is connected to the other end of the first branch pipe (85), has the other end connected to a halfway point of the low-pressure liquid pipe (82). The second connection pipe (92) is provided with a reheat solenoid valve (70) and the reheat heat exchanger (32) that are arranged in this order. A third connection pipe (93) is connected to a halfway point of the first connection pipe (91) (specifically, a point between the other end of the first connection pipe (91) connected to the low-pressure liquid pipe (82) and the heater solenoid valve (71)). The third connection pipe (93), of which one end is connected to the halfway point of the first connection pipe (91), has the other end connected to a halfway point of the low-pressure liquid pipe (82). The third connection pipe (93) is provided with a drain pan heater (77).

### <<Heater Solenoid Valve and Reheat Solenoid Valve>>

The reheat solenoid valve (70) and the heater solenoid valve (71) are each configured so that its opening degree is adjustable in repose to a control by the controller (100). The flow rates of the refrigerant in the first and third connection pipes (91 and 93) are regulated by adjusting the opening degree of the heater solenoid valve (71). The flow rate of the refrigerant in the second connection pipe (92) is regulated by adjusting the opening degree of the reheat solenoid valve (70). The heater solenoid valve (71) is switched into an open state when the drain pan heater (77) is activated.

### <<Drain Pan Heater>>

The drain pan heater (77) is configured to heat a drain pan (not shown) which receives the water that has condensed in the evaporator (25), and to melt the ice that has formed in the drain pan. The drain pan heater (77) is configured such that the refrigerant discharged from the compressor (21) (i.e., hot gas) flows into the drain pan heater (77).

### <<Reheat Heat Exchanger>>

During the dehumidifying operation, part of the refrigerant discharged from the compressor (21) flows into the reheat heat exchanger (32). The reheat heat exchanger (32) heats the air which is passing through itself (specifically, the air which has been cooled and dehumidified by the evaporator (25)) by allowing the refrigerant that has entered the reheat heat exchanger (32) to dissipate its heat into the air. In other words, during the dehumidifying operation, the reheat heat exchanger (32) allows the refrigerant flowing through the reheat heat exchanger (32) to exchange heat with the air passing through the reheat heat exchanger (32), and consequently, the refrigerant flowing through the reheat heat exchanger (32) condenses, while the air passing through the reheat heat exchanger (32) is heated. For example, the reheat heat exchanger (32) may be implemented as a heat exchanger which includes circular heat transfer tubes (the so-called fin-and-tube heat exchanger of a cross fin tube type). The heat transfer tubes of the reheat heat exchanger (32) extend in the width direction inside of the container (C). The refrigerant which has flowed out of the reheat heat exchanger (32) enters the low-pressure liquid pipe (82).

### <<Second Branch Pipe>>

Further, a second branch pipe (86) is connected to a halfway point of the high-pressure liquid pipe (81) (specifically, a point between the first subcooling heat exchanger (60) and the first on-off valve (35)). Part of the refrigerant that flows through the high-pressure liquid pipe (81) enters the second branch pipe (86). The second branch pipe (86), of which one end is connected to the halfway point of the high-pressure liquid pipe (81), has the other end connected to an intermediate port communicating with a compression chamber which has an intermediate pressure and which forms part of the compressor (21). The second branch pipe (86) is provided with a second on-off valve (36), a capillary tube (39), the second low-pressure side channel (65) of the second subcooling heat exchanger (63), and the first low-pressure side channel (62) of the first subcooling heat exchanger (60), which are arranged in this order.

### <<Second On-off Valve>>

The second on-off valve (36) is configured to regulate the flow rate of the refrigerant flowing through the second branch pipe (86). The opening degree of the second on-off valve (36) is adjustable in response to a control by the controller (100). The second on-off valve (36) is switched into an open state when the first and second subcooling heat exchangers (60, 63) subcool the refrigerant. The second on-off valve (36) is switched into a closed state when the first and second subcooling heat exchangers (60, 63) do not subcool the refrigerant.

### <<Fourth Connection Pipe>>

Further, a fourth connection pipe (94) is connected to a halfway point of the second branch pipe (86) (specifically, a point on the refrigerant suction side of the second on-off valve (36), i.e. a point between the end of the second branch pipe (86) connected to the high-pressure liquid pipe (81) and the second on-off valve (36)). The fourth connection pipe (94), of which one end is connected to the halfway point of the second branch pipe (86), has the other end connected to a halfway point of the low-pressure liquid pipe (82).

### <<Fifth Connection Pipe>>

A fifth connection pipe (95) is connected to a halfway point of the fourth connection pipe (94). The fifth connection pipe (95), of which one end is connected to the halfway point of the fourth connection pipe (94), has the other end connected to a halfway point of the low-pressure gas pipe (83) (specifically, a point between the suction side of the compressor (21) and the suction proportional valve (66)). The fifth connection pipe (95) is provided with a third on-off valve (37).

### <<Third On-off Valve>>

The third on-off valve (37) is configured to regulate the flow rate of the refrigerant which flows through the fifth connection pipe (95). The opening degree of the third on-off valve (37) is adjustable in response to a control by the controller (100). The third on-off valve (37) is provided to protect the refrigerant circuit (16). Specifically, when a discharge pressure of the compressor (21) (i.e., the pressure of the high-pressure gaseous refrigerant being discharged from the compressor (21)) exceeds a predetermined abnormal high-pressure threshold, the third on-off valve (37) is switched into an open state.

### <<Sixth Connection Pipe>>

A sixth connection pipe (96) is connected to a halfway point of the low-pressure gas pipe (83) (specifically, a point upstream of the suction proportional valve (66) with respect to the refrigerant flow, i.e., a point between the evaporator (25) and the suction proportional valve (66)). The sixth connection pipe (96), of which one end is connected to the halfway point of the low-pressure gas pipe (83), has the other end connected to a halfway point of the high-pressure gas pipe (80). The sixth connection pipe (96) is provided with a fourth on-off valve (38).

### <<Fourth On-off Valve>>

The fourth on-off valve (38) is configured to regulate the flow rate of the refrigerant flowing through the sixth connection pipe (96). The opening degree of the fourth on-off valve (38) is adjustable in response to a control by the controller (100). The fourth on-off valve (38) is provided to protect the refrigerant circuit (16). Specifically, when the suction pressure of the compressor (21) (i.e., the pressure of the low-pressure gaseous refrigerant being sucked into the compressor (21)) becomes lower than a predetermined abnormal low-pressure threshold, the fourth on-off valve (37) is switched into an open state.

### <<Various kinds of sensors>>

The refrigerant circuit (16) is provided with various kinds of sensors. In this example, the refrigerant circuit (16) is provided with a high pressure switch (110), a high pressure sensor (111), a discharge temperature sensor (112), a low pressure sensor (113), and a suction temperature sensor (114). The high pressure switch (110), the high pressure sensor (111), and the discharge temperature sensor (112) are arranged on the high-pressure gas pipe (80) of the refrigerant circuit (16). The low pressure sensor (113) and the suction temperature sensor (114) are arranged between the evaporator (25) and the compressor (21) on the low-pressure gas pipe (83).

The high pressure sensor (111) is configured to detect the pressure of the high-pressure gaseous refrigerant being discharged from the compressor (21) (i.e., the discharge pressure of the compressor (21)). The discharge temperature sensor (112) is configured to detect the temperature of the high-pressure gaseous refrigerant being discharged from the compressor (21). The low pressure sensor (113) is configured to detect the pressure of the low-pressure gaseous refrigerant being sucked into the compressor (21) (i.e., the suction pressure of the compressor (21)). The suction temperature sensor (114) is configured to detect the temperature of the low-pressure gaseous refrigerant being sucked into the compressor (21). The values (pressures and temperatures) detected by these sensors (111-114) are transmitted to the controller (100), and used appropriately for various kinds of controls to be detailed later.

### <Configuration of Controller>

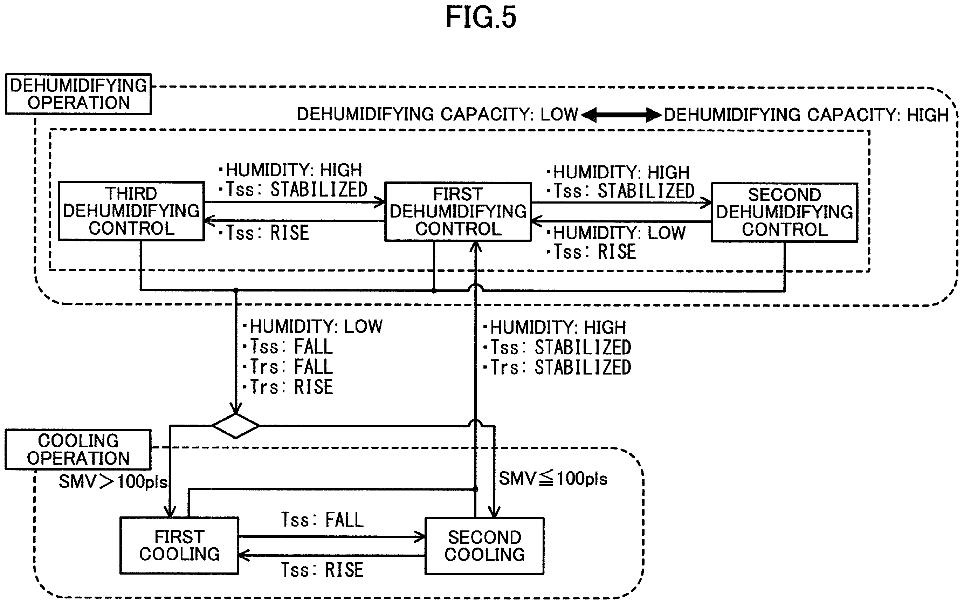

The controller (100) is configured to control the operation of the container refrigeration device (10). Specifically, the controller (100) controls the cooling section (18) such that the cooling operation or the dehumidifying operation is performed. As shown in FIG. 5, during the dehumidifying operation, a first, second or third dehumidifying control is performed in this example. The controller (100) includes a temperature control section (101), a target control section (201), and an operation control section (105).

### <<Temperature Control Section>>

The temperature control section (101) monitors, during the cooling and dehumidifying operations, the temperature of the blown air detected by the blown air temperature sensor (34) (i.e., the detected blown air temperature (Tss)), and controls the cooling section (18) such that the detected blown air temperature (Tss) becomes equal to a target temperature (Tx). Specifically, the temperature control section (101) performs first cooling if the detected blown air temperature (Tss) is higher than the target temperature (Tx). The temperature control section (101) performs second cooling if the detected blown air temperature (Tss) is lower than the target temperature (Tx). The first cooling is performed to increase the cooling capacity of the evaporator (25). The second cooling is performed to reduce the cooling capacity of the evaporator (25).

In this example, when performing the first cooling, the temperature control section (101) increases the opening degree of the suction proportional valve (66) of the refrigerant circuit (16). When performing the second cooling, the temperature control section (101) reduces the opening degree of the suction proportional valve (66) of the refrigerant circuit (16). When the modes of operation of the container refrigeration device (10) are changed from the dehumidifying operation to the cooling operation, the temperature control section (101) performs the first or second cooling in accordance with the opening degree of the suction proportional valve (66) of the refrigerant circuit (16). Specifically, the temperature control section (101) performs the first cooling if the opening degree of the suction proportional valve (66) is greater than "100 pls." The temperature control section (101) performs the second cooling if the opening degree of the suction proportional valve (66) is "100 pls" or less.

### <<Target Control Section>>

The target control section (201) is configured to set (or correct) the target temperature with respect to the detected blown air temperature (Tss) during the cooling and dehumidifying operations. The target control section (201) includes a target setting section (102), a first correction section (103), and a second correction section (104).

### -Target Setting Section-

During the cooling operation, the target setting section (102) sets the target temperature (Tx) to be a first preset temperature, which is equal to a preset inside temperature (Tsp) that has been determined in advance with respect to the inside temperature of the container (C). When the modes of operation of the container refrigeration device (10) are changed from the cooling operation to the dehumidifying operation, the target setting section (102) sets the target temperature (Tx) to be a second preset temperature, which is the sum of the preset inside temperature (Tsp) and a predetermined target increment temperature. In other words, the second preset temperature is a value which is higher than the preset value of the inside temperature (i.e., the preset inside temperature (Tsp)) of the container (C) by a predetermined value.

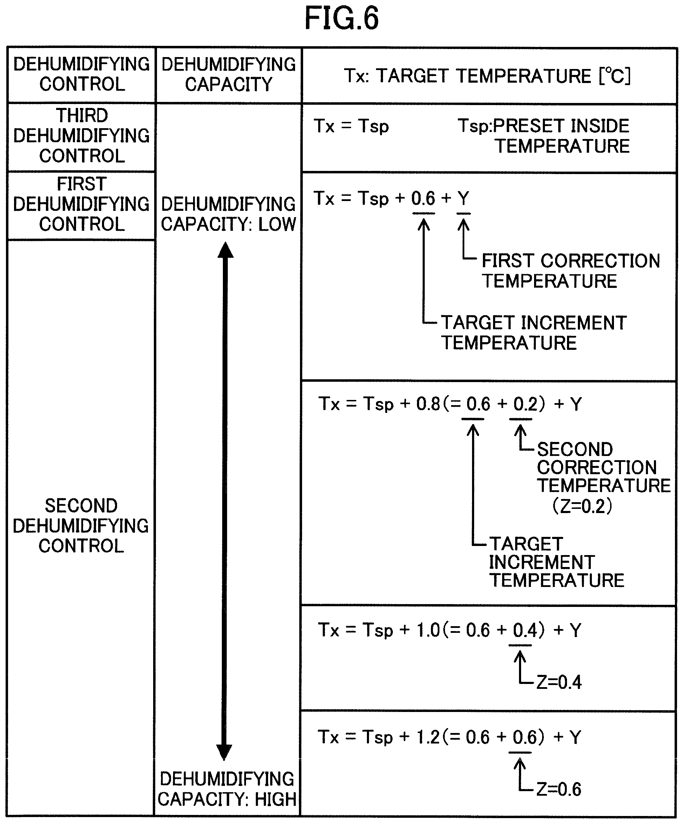

In this example, the target setting section (102) sets the target temperature (Tx) to be the second preset temperature when the first or second dehumidifying control is being performed. The target setting section (102) sets the target temperature (Tx) to be the first preset temperature when the cooling operation or the third dehumidifying control is being performed. For example, as shown in FIG. 6, the target increment temperature is set to "0.6°C." Note that "0.6°C" is an example of the target increment temperature, and the target increment temperature is not limited to this value.

### -First Correction Section-

The first correction section (103) monitors the temperature of the sucked air detected by the sucked air temperature sensor (33) (i.e., the detected sucked air temperature (Trs)). If the detected sucked air temperature (Trs) becomes higher (or lower) than a predetermined reference sucked air temperature after the modes of operation of the container refrigeration device (10) have been changed from the cooling operation to the dehumidifying operation, the first correction section (103) corrects the target temperature (Tx). Specifically, the first correction section (103) lowers the target temperature (Tx) when the detected sucked air temperature (Trs) becomes higher than the reference sucked air temperature. The first correction section (103) raises the target temperature (Tx) when the detected sucked air temperature (Trs) becomes lower than the reference sucked air temperature. Further, the first correction section (103) may be configured to periodically perform the correction of the target temperature (Tx) (i.e., to periodically correct the target temperature (Tx) in accordance with the results of comparison between the detected sucked air temperature (Trs) and the reference sucked air temperature) after the modes of operation of the container refrigeration device (10) have been changed from the cooling operation to the dehumidifying operation.

The first correction section (103) corrects the target temperature (Tx) such that the target temperature (Tx) becomes equal to or higher than the preset inside temperature (Tsp). In other words, the lower limit of the target temperature (Tx) is set to be the preset inside temperature (Tsp).

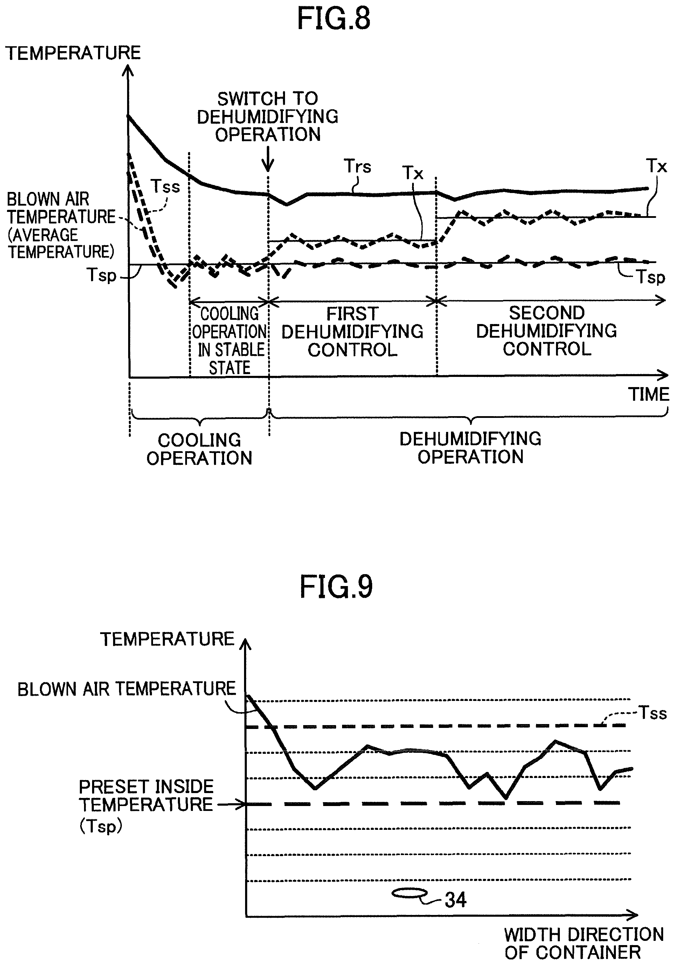

In this example, the reference sucked air temperature is set to be a temperature which is detected by the sucked air temperature sensor (33) when the cooling operation is stably performed (i.e., the temperature of the sucked air detected by the sucked air temperature sensor (33) when the cooling operation is in a stabilized state; hereinafter referred to as the stabilized sucked air temperature (Trs')). For example, "when the cooling operation is stably performed (i.e. when the cooling operation is in a stabilized state)" refers herein to a situation in which, after the inside of the container (C) has been cooled and the temperature of the blown air has been lowered as a result of the cooling operation, the temperature of the blown air (specifically, the detected blown air temperature (Tss)) is controlled and allowed to vary within a predetermined temperature range relative to the preset inside temperature (Tsp), as shown in FIG. 8. The first correction section (103) of the target control section (201) may be configured to memorize the stabilized sucked air temperature (Trs') when the cooling operation is performed (i.e., before a switch is made from the cooling operation to the dehumidifying operation).

In this example, as shown in FIG. 6, the first correction section (103) corrects the target temperature (Tx) by adding a first correction temperature (Y) to the target temperature (Tx). That is to say, the target temperature (Tx) corrected by the first correction section (103) corresponds to the sum of the yet-to-be corrected target temperature (Tx) and the first correction temperature (Y). The first correction section (103) sets the first correction temperature (Y) to be a negative value if the detected sucked air temperature (Trs) is higher than the reference sucked air temperature. The first correction section (103) sets the first correction temperature (Y) to be a positive value if the detected sucked air temperature (Trs) is lower than the reference sucked air temperature.

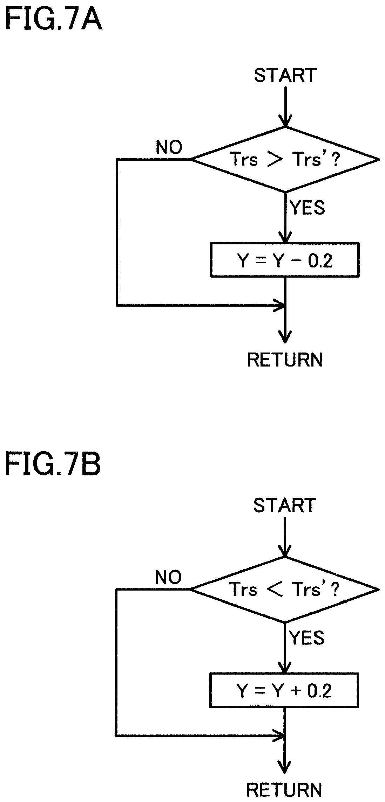

In this example, as shown in FIGS. 7A and 7B, the first correction section (103) is configured to periodically perform an adjustment of the first correction temperature (i.e. adjustment of the first correction temperature based on comparison between the detected sucked air temperature (Trs) and the reference sucked air temperature) after a switch has been made from the cooling operation to the dehumidifying operation. For example, supposing that the reference sucked air temperature is set to be the stabilized sucked air temperature (Trs'); and that the yet-to-be corrected target temperature (Tx) is set to be the second preset temperature that is the sum of the preset inside temperature (Tsp) and the target increment temperature (+0.6°C) (i.e., Tsp + 0.6°C); and that the first correction temperature (Y) representing a negative value is set to be "-0.2°C"; and that the first correction temperature (Y) representing a positive value is set to be "+0.2°C, the first correction section (103) corrects the target temperature (Tx) in the flowing manner.

As show in FIG. 7A, after a switch has been made from the cooling operation to the dehumidifying operation, if the detected sucked air temperature (Trs) becomes higher than the stabilized sucked air temperature (Trs'), the first correction section (103) adds the first correction temperature representing a negative value (-0.2°C) to the target temperature (Tx). Consequently, the target temperature (Tx) is corrected into "Tsp + 0.6°C - 0.2°C." If the detected sucked air temperature (Trs) after the switch into the dehumidifying operation is still higher than the stabilized sucked air temperature (Trs') even after this correction, the first correction section (103) further adds the first correction temperature representing a negative value (-0.2°C) to the corrected target temperature (Tx). Consequently, the target temperature (Tx) is further corrected into "Tsp + 0.6°C - (0.2°C × 2)."

On the other hand, as shown in FIG. 7B, after a switch has been made from the cooling operation to the dehumidifying operation, if the detected sucked air temperature (Trs) becomes lower than the stabilized sucked air temperature (Trs'), the first correction section (103) adds the first correction temperature representing a positive value (+0.2°C) to the target temperature (Tx). Consequently, the target temperature (Tx) is corrected into "Tsp + 0.6°C + 0.2°C." If the detected sucked air temperature (Trs) after the switch into the dehumidifying operation is still lower than the stabilized sucked air temperature (Trs') even after this correction, the first correction section (103) further adds the first correction temperature representing a positive value (+0.2°C) to the corrected target temperature (Tx). Consequently, the target temperature (Tx) is further corrected into "Tsp + 0.6°C + (0.2°C × 2)."

### -Second Correction Section-

When the dehumidifying operation is being performed (in this example, when the second dehumidifying control is being performed), the second correction section (104) monitors the dehumidifying capacity of the evaporator (25). The second correction section (104) corrects the target temperature (Tx) in accordance with the dehumidifying capacity of the evaporator (25) such that the target temperature (Tx) rises as the dehumidifying capacity of the evaporator (25) increases. That is to say, the second correction section (104) raises the target temperature (Tx) as the dehumidifying capacity of the evaporator (25) increases.

In this example, when the dehumidifying operation is being performed (specifically, when the second dehumidifying control is being performed), the second correction section (104) monitors the discharge pressure of the compressor (21) (i.e., the pressure of the refrigerant which is being discharged) detected by the high pressure sensor (111). The second correction section (104) corrects the target temperature (Tx) in accordance with the discharge pressure of the compressor (21) such that the target temperature (Tx) rises as the discharge pressure of the compressor (21) rises.

In this example, as shown in FIG. 6, the second correction section (104) corrects the target temperature (Tx) by adding a second correction temperature (Z) to the target temperature (Tx). That is to say, the target temperature (Tx) corrected by the second correction section (104) corresponds to the sum of the yet-to-be corrected target temperature (Tx) and the second correction temperature (Z). Further, the second correction section (104) adjusts the second correction temperature (Z) in accordance with the dehumidifying capacity of the evaporator (25) (in this example, the discharge pressure of the compressor (21)) such that the second correction temperature (Z) rises as the dehumidifying capacity of the evaporator (25) increases (i.e., as the discharge pressure of the compressor (21) increases, in this example). For example, as shown in FIG. 6, the second correction section (104) increases the second correction temperature (Z) stepwise to "0.2°C," "0.4°C," and "0.6°C" in this order as the dehumidifying capacity of the evaporator (25) increases.

### <<Operation Control Section>>

Upon activation of the container refrigeration device (10), the operation control section (105) sets the operation mode of the container refrigeration device (10) to be the cooling operation. The operation control section (105) monitors the detected sucked air humidity (i.e., the humidity of the sucked air detected by the humidity sensor (53)), the detected sucked air temperature (Trs), and the detected blown air temperature (Tss), and changes the modes of operation of the container refrigeration device (10) (i.e. from the cooling operation into the dehumidifying operation, or vice versa). The operation control section (105) further performs any one of the first to third dehumidifying controls when the dehumidifying operation is being performed.

### -Control during Cooling Operation-

During the cooling operation, the operation control section (105) controls the cooling section (18) such that the heating device (17) (the reheat heat exchanger (32), in this example) is at rest and the sucked air which has been sucked from inside of the container (C) is cooled by the evaporator (25) of the refrigerant circuit (16).

In this example, during the cooling operation, the operation control section (105) holds the first on-off valve (35) and the reheat solenoid valve (70) open and closed, respectively. The operation control section (105) also adjusts the opening degree of the expansion valve (76) to be a predetermined degree, and basically keeps the compressor (21), the outer fan (24), and the inner fans (26) running.

### -First Dehumidifying Control-

When performing the first dehumidifying control, the operation control section (105) controls the cooling section (18) such that the sucked air which has been sucked from inside of the container (C) is cooled and dehumidified by the evaporator (25) of the refrigerant circuit (16), and then heated by the heating device (17) (the reheat heat exchanger (32), in this example).

In this example, when performing the first dehumidifying control, the operation control section (105) allows part of the refrigerant discharged from the compressor (21) to directly enter the reheat heat exchanger (32). Specifically, the operation control section (105) holds the first on-off valve (35) and the reheat solenoid valve (70) both open, adjusts the opening degree of the expansion valve (76) to be a predetermined degree, and basically keeps the compressor (21), the outer fan (24), and the inner fans (26) running.

### -Second Dehumidifying Control-

In this example, when performing the second dehumidifying control, the operation control section (105) holds the first on-off valve (35) and the reheat solenoid valve (70) both open, adjusts the opening degree of the expansion valve (76) to be a predetermined degree, and basically keeps the compressor (21), the outer fan (24), and the inner fans (26) running, as in the first dehumidifying control.

Further, when performing the second dehumidifying control, the operation control section (105) controls the cooling section (18) such that the evaporator (25) has a greater dehumidifying capacity than its capacity during the first dehumidifying control. Further, when performing the second dehumidifying control, the operation control section (105) controls the cooling section (18) in accordance with a dehumidification load (i.e., the difference between the humidity of the sucked air detected by the humidity sensor (53) and a predetermined target humidity) such that the dehumidifying capacity of the evaporator (25) of the refrigerant circuit (16) increases as the dehumidification load increases. That is to say, the operation control section (105) increases the dehumidifying capacity of the evaporator (25) as the dehumidification load increases.

In this example, when performing the second dehumidifying control, the operation control section (105) monitors the discharge pressure of the compressor (21) detected by the high pressure sensor (111), and controls the outer fan (24) such that the discharge pressure of the compressor (21) becomes equal to a predetermined target discharge pressure. Specifically, the operation control section (105) turns OFF the outer fan (24) if the discharge pressure of the compressor (21) is lower than the target discharge pressure, and turns ON the outer fan (24) if the discharge pressure of the compressor (21) is higher than the target discharge pressure. Further, in this example, when performing the second dehumidifying control, the operation control section (105) monitors the dehumidification load, and sets the target discharge pressure in accordance with the dehumidification load such that the target discharge pressure rises as the dehumidification load increases. The minimum of the target discharge pressure (which is variable) at the time of the second dehumidifying control is higher than the target discharge pressure (which is constant) at the time of the first dehumidifying control.

### -Third Dehumidifying Control-

When performing the third dehumidifying control, the operation control section (105) controls the cooling section (18) such that the heating device (17) (the reheat heat exchanger (32), in this example) is at rest and sucked air which has been sucked from inside of the container (C) is cooled and dehumidified by the evaporator (25) of the refrigerant circuit (16).

In this example, when performing the third dehumidifying control, the operation control section (105) holds the first on-off valve (35) and the reheat solenoid valve (70) open and closed, respectively. The operation control section (105) also adjusts the opening degree of the expansion valve (76) to be a predetermined degree, and basically keeps the compressor (21), the outer fan (24), and the inner fans (26) running.

### <Change of Modes of Operation>

Next, it will be described with reference to FIG. 5 how the operation control section (105) changes the modes of operation. In this example, the operation control section (105) makes a switch from the cooling operation to the dehumidifying operation, or vice versa, and from one of the first, second and third dehumidifying controls to another in the following manner.

### <<From Cooling Operation to Dehumidifying Operation>>

If all of the following conditions are satisfied when the cooling operation is being performed, the operation control section (105) changes the modes of operation of the container refrigeration device (10) from the cooling operation to the dehumidifying operation:
- Condition 1: the detected sucked air humidity (the humidity of the sucked air detected by the humidity sensor (53)) is higher than the predetermined target humidity;
- Condition 2: the detected blown air temperature (Tss) is within a predetermined blown air temperature range (i.e., a temperature range including the target temperature (Tx)); and
- Condition 3: the detected sucked air temperature (Trs) is within a predetermined sucked air temperature range (i.e., a temperature range including the target temperature (Tx)).

### <<From First Dehumidifying Control to Second Dehumidifying Control>>

Upon a change of the modes of operation of the container refrigeration device from the cooling operation to the dehumidifying operation, the operation control section (105) performs the first dehumidifying control. When performing the first dehumidifying control, if all of the following conditions are satisfied, the operation control section (105) finishes the first dehumidifying control to start performing the second dehumidifying control:
- Condition 1: the detected sucked air humidity is higher than the target humidity; and
- Condition 2: the detected blown air temperature (Tss) is within the blown air temperature range.

### <<From Second Dehumidifying Control to First Dehumidifying Control>>

When performing the second dehumidifying control, if at least one of the following conditions is satisfied, the operation control section (105) finishes the second dehumidifying control to start performing the first dehumidifying control:
- Condition 1: the detected sucked air humidity is lower than a predetermined reference humidity (which is lower than the target humidity); and
- Condition 2: the detected blown air temperature (Tss) is higher than a predetermined first reference temperature (which falls within the blown air temperature range).

### <<From First Dehumidifying Control to Third Dehumidifying Control>>

When performing the first dehumidifying control, if the following condition is satisfied, the operation control section (105) finishes the first dehumidifying control to start performing the third dehumidifying control:
- Condition 1: the detected blown air temperature (Tss) is higher than a predetermined second reference temperature (which is higher than the first reference temperature and lower than the upper limit temperature of the blown air temperature range).

### <<From Third Dehumidifying Control to First Dehumidifying Control>>

When performing the third dehumidifying control, if all of the following conditions are satisfied, the operation control section (105) finishes the third dehumidifying control to start performing the first dehumidifying control:
- Condition 1: the detected sucked air humidity is higher than the target humidity; and
- Condition 2: the detected blown air temperature (Tss) is within the blown air temperature range.

### <<From Dehumidifying Operation to Cooling Operation>>

When performing the dehumidifying operation (specifically, when performing the first, second or third dehumidifying control), if at least one of the following conditions is satisfied, the operation control section (105) changes the modes of operation of the container refrigeration device (10) from the dehumidifying operation to the cooling operation:
- Condition 1: the detected sucked air humidity is lower than the target humidity;
- Condition 2: the detected blown air temperature (Tss) is lower than the lower limit temperature of the blown air temperature range;
- Condition 3: the detected sucked air temperature (Trs) is lower than the lower limit temperature of the sucked air temperature range; and
- Condition 4: the detected sucked air temperature (Trs) is higher than the upper limit temperature of the sucked air temperature range.

### < Operation of Container Refrigeration Device>

Next, it will be described how the container refrigeration device (10) of the first embodiment performs the cooling and dehumidifying operations. For the sake of simplicity, in the following description, the second, third and fourth on-off valves (36, 37 and 38), and the heater solenoid valve (71) are supposed to be in a closed state.

### <<Cooling Operation>>

During the cooling operation, the first on-off valve (35) is held open, the reheat solenoid valve (70) is held closed, and the opening degree of the expansion valve (76) is adjusted to be a predetermined degree. The compressor (21), the outer fan (24), and the inner fans (26) are basically kept running.

The refrigerant discharged from the compressor (21) passes through the high-pressure gas pipe (80) to be directed toward the condenser (23). When flowing through the condenser (23), the refrigerant exchanges heat with the air which is passing through the condenser (23) (i.e., outside air which has been blown by the outer fan (24)). Consequently, the refrigerant in the condenser (23) dissipates heat into the air (the outside air) passing through the condenser (23) and condenses.

The liquid refrigerant which has flowed out of the condenser (23) passes through the high-pressure liquid pipe (81) to flow into the receiver (73), where the refrigerant is separated into a saturated liquid and a saturated gas. The saturated liquid refrigerant is directed toward the first high-pressure side channel (61) of the first subcooling heat exchanger (60).

The refrigerant which has passed through the first high-pressure side channel (61) of the first subcooling heat exchanger (60) flows through the high-pressure liquid pipe (81), and then passes through the first on-off valve (35). The refrigerant which has passed through the first on-off valve (35) enters the dryer (42), where the moisture of the refrigerant is captured. Thereafter, the refrigerant flows into the second high-pressure side channel (64) of the second subcooling heat exchanger (63). After passing through the second high-pressure side channel (64) of the second subcooling heat exchanger (63), the refrigerant flows through the high-pressure liquid pipe (81), and is decompressed by the expansion valve (76). The refrigerant then flows through the low-pressure liquid pipe (82) to be directed toward the evaporator (25).

The refrigerant that is flowing through the evaporator (25) exchanges heat with the air which is passing through the evaporator (25) (i.e., the inside air which has been blown by the inner fans (26), i.e., the sucked air). Consequently, the refrigerant that is flowing through the evaporator (25) absorbs heat from the air (the sucked air) that is passing through the evaporator (25) and evaporates, thereby cooling the air (the sucked air) that is passing through the evaporator (25). The refrigerant which has flowed out of the evaporator (25) flows through the low-pressure gas pipe (83) and passes through the suction proportional valve (66). Then, the refrigerant is sucked into the compressor (21) to be compressed there again.

In this manner, during the cooling operation, the sucked air that has been sucked into the inner storage space (S2) from inside of the container (C) through the air inlet (51) is cooled by the evaporator (25), and then, passes through the reheat heat exchanger (32) which is at rest. Thereafter, the air is blown out through the air outlet (52) and goes back into the inside of the container (C).

During the cooling operation, the target control section (201) sets the target temperature (Tx) to be the first preset temperature that is equal to the preset inside temperature (Tsp). Accordingly, the temperature control section (101) performs the first cooling and the second cooling such that the detected blown air temperature (Tss) becomes equal to the first preset temperature that is equal to the preset inside temperature (Tsp).

If the detected blown air temperature (Tss) is higher than the first preset temperature, the temperature control section (101) performs the first cooling, during which the temperature control section (101) increases the opening degree of the suction proportional valve (66) of the refrigerant circuit (16). This increases the flow rate of the refrigerant circulating through the refrigerant circuit (16), and increases the cooling capacity of the evaporator (25). Consequently, the temperature of the air that is blown into the container (C) after having passed sequentially through the evaporator (25) and the reheat heat exchanger (32) falls, and the detected blown air temperature (Tss) is lowered toward the first preset temperature (i.e., the preset inside temperature (Tsp)).

On the other hand, if the detected blown air temperature (Tss) is lower than the first preset temperature, the temperature control section (101) performs the second cooling, during which the temperature control section (101) reduces the opening degree of the suction proportional valve (66). This reduces the flow rate of the refrigerant circulating through the refrigerant circuit (16), and also reduces the cooling capacity of the evaporator (25). Consequently, the temperature of the air that is blown into the container (C) after having passed sequentially through the evaporator (25) and the reheat heat exchanger (32) rises, and the detected blown air temperature (Tss) also rises toward the first preset temperature (i.e., the preset inside temperature (Tsp)). During the second cooling, the temperature control section (101) may hold the fourth on-off valve (38) open in order to protect the compressor (21).

### -Subcooling of Refrigerant in First and Second Subcooling Heat Exchangers-

If the second on-off valve (36) is held open during the cooling operation, the first and second subcooling heat exchangers (60, 63) subcool the refrigerant. Specifically, the refrigerant circulates through the refrigerant circuit (16) in the following manner:

The refrigerant passes through the first high-pressure side channel (61) of the first subcooling heat exchanger (60). Part of the refrigerant is then diverted into the second branch pipe (86) and passes through the second on-off valve (36). On the other hand, the rest of the refrigerant flows through the high-pressure liquid pipe (81) and passes through the first on-off valve (35). The refrigerant that has passed through the second on-off valve (36) is decompressed by the capillary tube (39). Thereafter, the refrigerant passes sequentially through the second low-pressure side channel (65) of the second subcooling heat exchanger (63) and the first low-pressure side channel (62) of the first subcooling heat exchanger (60), and enters the intermediate port of the compressor (21). In the first subcooling heat exchanger (60), the refrigerant that is flowing through the first high-pressure side channel (61) exchanges heat with the refrigerant that is flowing through the first low-pressure side channel (62), thereby subcooling the refrigerant that is flowing through the first high-pressure side channel (61).

On the other hand, the refrigerant that has passed through the first on-off valve (35) enters the dryer (42), where moisture is captured from the refrigerant. Thereafter, the refrigerant flows into the second high-pressure side channel (64) of the second subcooling heat exchanger (63). In the second subcooling heat exchanger (63), the refrigerant that is flowing through the second high-pressure side channel (64) exchanges heat with the refrigerant that is flowing through the second low-pressure side channel (65), thereby subcooling the refrigerant that is flowing through the second high-pressure side channel (64). The refrigerant that has been subcooled in the second high-pressure side channel (64) of the second subcooling heat exchanger (63) flows through the high-pressure liquid pipe (81) and enters the expansion valve (76) where the refrigerant is decompressed. Thereafter, the refrigerant flows through the low-pressure liquid pipe (82) to be directed toward the evaporator (25).

Thus, if the second on-off valve (36) is held open during the cooling operation, the first subcooling heat exchanger (60) allows the refrigerant that is flowing through the first high-pressure side channel (61) to exchange heat with the refrigerant that is flowing through the first low-pressure side channel (62), thereby subcooling the refrigerant that is flowing through the first high-pressure side channel (61). The second subcooling heat exchanger (63) also allows the refrigerant that is flowing through the second high-pressure side channel (64) to exchange heat with the refrigerant that is flowing through the second low-pressure side channel (65), thereby subcooling the refrigerant that is flowing through the second high-pressure side channel (64).

### <<Dehumidifying Operation (First Dehumidifying Control)>>

When the modes of operation of the container refrigeration device (10) are changed from the cooling operation to the dehumidifying operation, the first dehumidifying control is performed, and the reheat solenoid valve (70) is switched into an open state. During the first dehumidifying control, the first on-off valve (35) is held open, the opening degree of the expansion valve (76) is adjusted to be a predetermined degree, and the compressor (21), the outer fan (24), and the inner fans (26) are basically kept running.

During the dehumidifying operation, part of the refrigerant discharged from the compressor (21) flows through the second connection pipe (92), passes through the reheat solenoid valve (70), and directly enters the reheat heat exchanger (32). On the other hand, the rest of the refrigerant discharged from the compressor (21) (in other words, the refrigerant which does not flows into the second connection pipe (92)) condenses in the condenser (23), expands in the expansion valve (76), and then evaporates in the evaporator (25), as in the cooling operation. Specifically, the refrigerant that is flowing through the evaporator (25) exchanges heat with the air that is passing through the evaporator (25) (i.e., the inside air which has been blown by the inner fans (26), i.e., the sucked air). Consequently, the refrigerant flowing through the evaporator (25) absorbs heat from the air (the sucked air) passing through the evaporator (25) and evaporates. As a result, the air (the sucked air) that is passing through the evaporator (25) is cooled to cause condensation. Thus, the sucked air is dehumidified.

On the other hand, the refrigerant (high-pressure gaseous refrigerant) that is flowing through the reheat heat exchanger (32) exchanges heat with the air that is passing through the reheat heat exchanger (32) (i.e., the air cooled and dehumidified by the evaporator (25)). Consequently, the (high-pressure gaseous) refrigerant that is flowing through the reheat heat exchanger (32) condenses by dissipating heat into the air that is passing through the reheat heat exchanger (32), and the air that is passing through reheat heat exchanger (32) is heated.

In this manner, during the dehumidifying operation, the sucked air that has been sucked into the inner storage space (S2) from inside of the container (C) through the air inlet (51) is cooled and dehumidified by the evaporator (25), and then heated by the reheat heat exchanger (32). Thereafter, the air is blown out through the air outlet (52) and goes back into the inside of the container.

When the modes of operation of the container refrigeration device (10) are changed from the cooling operation to the dehumidifying operation (i.e., when the first dehumidifying control is performed), the target setting section (102) sets the target temperature (Tx) to be the second preset temperature that is the sum of the preset inside temperature (Tsp) and the target increment temperature. Accordingly, the temperature control section (101) performs the first cooling and the second cooling such that the detected blown air temperature (Tss) becomes equal to the second preset temperature that is the sum of the preset inside temperature (Tsp) and the target increment temperature.

If the detected blown air temperature (Tss) is higher than the second preset temperature, the temperature control section (101) performs the first cooling. As a result, the cooling capacity of the evaporator (25) increases, and consequently, the temperature of the air that is blown into the container (C) after having passed sequentially through the evaporator (25) and the reheat heat exchanger (32) falls, and the detected blown air temperature (Tss) is lowered toward the second preset temperature (i.e., the sum of the preset inside temperature (Tsp) and the target increment temperature).

On the other hand, if the detected blown air temperature (Tss) is lower than the second preset temperature, the temperature control section (101) performs the second cooling. As a result, the cooling capacity of the evaporator (25) decreases, and consequently, the temperature of the air that is blown into the container (C) after having passed sequentially through the evaporator (25) and the reheat heat exchanger (32) rises, and the detected blown air temperature (Tss) also rises toward the second preset temperature (i.e., the sum of the preset inside temperature (Tsp) and the target increment temperature).

With the temperature control performed in this manner, even if the temperature of the blown air is raised by being heated by the reheat heat exchanger (32) to make the detected blown air temperature (Tss) higher than the target temperature (Tx), the first cooling performed by the temperature control section (101) can increase the cooling capacity of the evaporator (25) and lower the temperature of the blown air. Thus, an increase in the temperature of the blown air can be reduced during the dehumidifying operation.

### <<Second Dehumidifying Control>>

If the air inside of the container (C) still needs to be dehumidified even after having been dehumidified through the first dehumidifying control (that is to say, if the detected sucked air humidity is higher than the target humidity during the first dehumidifying control), the operation control section (105) finishes the first dehumidifying control to start performing the second dehumidifying control. During the second dehumidifying control, the first on-off valve (35) and the reheat solenoid valve (70) are held open, the opening degree of the expansion valve (76) is adjusted to be a predetermined degree, and the compressor (21), the outer fan (24), and the inner fans (26) are basically kept running.

Further, during the second dehumidifying control, the target temperature (Tx) is set to be the second preset temperature (the sum of the preset inside temperature (Tsp) and the target increment temperature). Accordingly, the temperature control section (101) performs the first cooling and the second cooling such that the detected blown air temperature (Tss) becomes equal to the second preset temperature.

Moreover, during the second dehumidifying control, the operation control section (105) sets the target discharge pressure in accordance with the dehumidification load such that the target discharge pressure rises as the dehumidification load increases. Also, the operation control section (105) controls start/stop of the outer fan (24) in accordance with the discharge pressure of the compressor (21) detected by the high pressure sensor (111). Specifically, if the discharge pressure of the compressor (21) detected by the high pressure sensor (111) becomes lower than the target discharge pressure, the operation control section (105) turns OFF the outer fan (24). This interferes with the heat exchange by the condenser (23) and raises the discharge pressure of the compressor (21). On the other hand, if the discharge pressure of the compressor (21) detected by the high pressure sensor (111) becomes higher than the target discharge pressure, the operation control section (105) turns ON the outer fan (24). This promotes the heat exchange by the condenser (23), and reduces the discharge pressure of the compressor (21). That is to say, the discharge pressure of the compressor (21) rises as the target discharge pressure rises.

The higher the discharge pressure of the compressor (21), the higher the pressure of the refrigerant that is flowing into the reheat heat exchanger (32), and consequently, the higher the heating capacity of the reheat heat exchanger (32). When the increase in the heating capacity of the reheat heat exchanger (32) raises the temperature of the blown air to make the detected blown air temperature (Tss) higher than the target temperature (Tx), the temperature control section (101) performs the first cooling to lower the detected blown air temperature (Tss). This increases the cooling capacity of the evaporator (25) and lowers the temperature of the blown air, thus lowering the detected blown air temperature (Tss) toward the target temperature (Tx). Further, the increase in the cooling capacity of the evaporator (25) leads to an increase in the amount of water which condenses in the evaporator (25), that is to say, leads to an increase in the dehumidifying capacity of the evaporator (25).

As can be seen, the target discharge pressure is set in accordance with the dehumidification load, which enables setting the dehumidifying capacity of the evaporator (25) in accordance with the dehumidification load such that the dehumidifying capacity of the evaporator (25) increases as the dehumidifying load increases.

Further, during the second dehumidifying control, to make the detected blown air temperature (Tss) as high as the target temperature (Tx), the temperature control section (101) and the operation control section (105) can control the cooling section (18) such that the cooling capacity of the evaporator (25) increases as the heating capacity of the reheat heat exchanger (32) increases, thereby increasing the dehumidifying capacity of the evaporator (25).

### <<Third Dehumidifying Control>>

If the detected blown air temperature (Tss) rises when the first dehumidifying control is being performed, the operation control section (105) finishes the first dehumidifying control to start performing the third dehumidifying control. During the third dehumidifying control, the reheat solenoid valve (70) is held closed, whereas the first on-off valve (35) is held open, the opening degree of the expansion valve (76) is adjusted to be a predetermined degree, and the compressor (21), the outer fan (24), and the inner fans (26) are basically kept running.

During the third dehumidifying control, the refrigerant discharged from the compressor condenses in the condenser (23), expands in the expansion valve (76), and then evaporates in the evaporator (25), as in the cooling operation. Specifically, the air (sucked air) that is passing through the evaporator (25) exchanges heat with the refrigerant that is flowing through the evaporator (25), and is cooled to cause condensation. In this manner, the sucked air that has been sucked from inside of the container (C) is cooled and dehumidified by the evaporator (25).

Further, during the third dehumidifying control, the target setting section (102) sets the target temperature (Tx) to be the first preset temperature that is equal to the preset inside temperature (Tsp). Accordingly, the temperature control section (101) performs the first cooling and the second cooling such that the detected blown air temperature (Tss) becomes equal to the first preset temperature.

### <Variation in Temperature of Blown Air Involved with Mode Change from Cooling Operation to Dehumidifying operation>

During the dehumidifying operation, the air that is passing through the heating device (17) (the reheat heat exchanger (32), in this example) may not be uniformly heated. For example, a temperature difference of the refrigerant present in the heat transfer tubes of the reheat heat exchanger (32) (the heat transfer tubes running in the width direction inside of the container) causes the air that is blown out of the reheat heat exchanger (32) to have non-uniformity in temperature. In such a case, once a switch is made from the cooling operation to the dehumidifying operation, it will be difficult for the blown air temperature sensor (34) to detect accurately the lowest temperature of the blown air with respect to the width direction inside of the container. For example, if the blown air temperature sensor (34) is provided at the middle of the width inside of the container (C) and if the blown air does not have the lowest temperature at the middle of the width inside the container but does have the lowest temperature at a point which is slightly closer to an end in the width direction than its middle point is, the temperature of the blown air detected by the blown air temperature sensor (34) (i.e., the detected blown air temperature (Tss)) becomes higher than the actual lowest temperature of the blown air with respect to the width direction inside of the container as shown in FIG. 9.

On the other hand, in the container refrigeration device (10) of the first embodiment, when a switch is made from the cooling operation to the dehumidifying operation, the target temperature (Tx) is set to be the second preset temperature (i.e., the sum of the preset inside temperature (Tsp) and the target increment temperature) that is higher than the preset inside temperature (Tsp). Therefore, the temperature of the blown air that is blown into the container (C) can be raised on average. In this manner, even if the air that is passing through the heating device (17) is heated non-uniformly with respect to the width direction inside of the container (C), the lowest temperature of the blown air with respect to the width direction inside of the container (C) is not allowed to be lower than the preset inside temperature (Tsp).

### <Correction of Target Temperature by First Correction Section>

Next, it will be described how the first correction section (103) corrects the target temperature (Tx). As described above, the first correction section (103) monitors the temperature of sucked air detected by the sucked air temperature sensor (33) (i.e., the detected sucked air temperature (Trs)). After the modes of operation of the container refrigeration device (10) are changed from the cooling operation to the dehumidifying operation, the first correction section (103) lowers the target temperature (Tx) if the detected sucked air temperature (Trs) becomes higher than the reference sucked air temperature, and raises the target temperature (Tx) if the detected sucked air temperature (Trs) becomes lower than the reference sucked air temperature.

The air that has been blown into the container (C) from the evaporator (25) and the heating device (17) circulates inside of the container (C), and then, is sucked into the evaporator (25) again. Therefore, the air that is being sucked from inside of the container (C) does not have as non-uniform a temperature distribution with respect to the width direction inside of the container (C) as the air that is being blown into the container (C). Further, a variation in the detected sucked air temperature (Trs) depends on a variation in the inside temperature of the container (C). Specifically, an increase in the inside temperature of the container (C) causes an increase in the temperature of the sucked air and an increase in the detected sucked air temperature (Trs). On the other hand, a decrease in the inside temperature of the container (C) causes a decrease in the temperature of the sucked air and a decrease in the detected sucked air temperature (Trs). Thus, if the detected sucked air temperature (Trs) becomes higher than the reference sucked air temperature (i.e., the stabilized sucked air temperature (Trs'), in this example) after a switch has been made from the cooling operation to the dehumidifying operation, a determination can be made that the inside temperature of the container (C) has risen. On the other hand, if the detected sucked air temperature (Trs) becomes lower than the reference sucked air temperature, a determination can also be made that the inside temperature of the container (C) has fallen.

As described above, in the container refrigeration device (10) of the first embodiment, the first correction section (103) corrects the target temperature (Tx) in accordance with a variation in the detected sucked air temperature (Trs) involved with the switch from the cooling operation to the dehumidifying operation. Specifically, if the inside temperature of the container (C) rises to make the detected sucked air temperature (Trs) higher than the reference sucked air temperature (i.e., the stabilized sucked air temperature (Trs'), in this example) after the switch from the cooling operation to the dehumidifying operation, the first correction section (103) lowers the target temperature (Tx). This allows for lowering the temperature of the blown air and eventually, the inside temperature of the container (C). On the other hand, if the inside temperature of the container (C) falls to make the detected sucked air temperature (Trs) lower than the reference sucked air temperature after the switch from the cooling operation to the dehumidifying operation, the first correction section (103) raises the target temperature (Tx). This allows for raising the temperature of the blown air and eventually, the inside temperature of the container (C).

Thus, the variation in the inside temperature of the container (C) involved with the switch from cooling operation to the dehumidifying operation can be reduced by controlling the temperature of the blown air in accordance with a variation in the detected sucked air temperature (Trs) that is caused after the switch.

### <Correction of Target Temperature by Second Correction Section>

Next, it will be described how the second correction section (104) corrects the target temperature (Tx). As described above, the second correction section (104) of this embodiment monitors the discharge pressure of the compressor (21) detected by the high pressure sensor (111) during the dehumidifying operation (specifically, during the second dehumidifying control). The second correction section (104) corrects the target temperature (Tx) in accordance with the discharge pressure of the compressor (21) such that the target temperature (Tx) rises as the discharge pressure of the compressor (21) rises.

The dehumidifying capacity of the evaporator (25) depends on the discharge pressure of the compressor (21). Specifically, an increase in the discharge pressure of the compressor (21) leads to an increase in the pressure of the refrigerant that flows into the reheat heat exchanger (32), and consequently, to an increase in the heating capacity of the reheat heat exchanger (32). The increase in the heating capacity of the reheat heat exchanger (32) in turn raises the temperature of the blown air, and accordingly, the detected blown air temperature (Tss) becomes higher than the target temperature (Tx). Therefore, the temperature control section (101) controls the cooling section (18) to lower the detected blown air temperature (Tss), and thereby increases the cooling capacity of the evaporator (25). In this manner, the dehumidifying capacity of the evaporator (25) increases.

Thus, since the dehumidifying capacity of the evaporator (25) depends on the discharge pressure of the compressor (21), correction of the target temperature (Tx) in accordance with the discharge pressure of the compressor (21) allows for correcting the target temperature (Tx) such that the target temperature (Tx) rises as the dehumidifying capacity of the evaporator (25) increases.

During the dehumidifying operation, the air is dehumidified by cooling the air and causing condensation in the evaporator (25). Thus, during the dehumidifying operation, the temperature of the blown air tends to fall more easily as the dehumidifying capacity (the cooling capacity) of the evaporator (25) increases.

As described above, in the container refrigeration device (10) of the first embodiment, during the dehumidifying operation, the second correction section (104) corrects the target temperature (Tx) in accordance with the dehumidifying capacity of the evaporator (25) such that the target temperature (Tx) rises as the dehumidifying capacity of the evaporator (25) increases. In this manner, the temperature of the blown air can be raised if the temperature of the blown air has a tendency to fall when the dehumidifying operation is being performed.

### <Advantages of First Embodiment>

As can be seen from the foregoing description, in the container refrigeration device (10) of the first embodiment, if a switch has been made from the cooling operation to the dehumidifying operation, the target temperature (Tx) is set to be the second preset temperature (i.e., the sum of the preset inside temperature (Tsp) and the target increment temperature) that is higher than the preset inside temperature (Tsp). Therefore, even if the air that has passed through the heating device (17) (e.g., the reheat heat exchanger (32), in this example) is not uniformly heated with respect to the width direction inside of the container (C), the lowest temperature of the blown air with respect to the width direction inside of the container (C) is not allowed to be lower than the preset inside temperature (Tsp). This prevents causing chilling injury to the load inside the container (C).

In addition, a variation in the inside temperature of the container (C), involved with the switch from the cooling operation to the dehumidifying operation, can be reduced by correcting the target temperature (Tx) in accordance with a variation in the detected sucked air temperature (Trs) (specifically, a variation in the result of comparison between the detected sucked air temperature (Trs) and the stabilized sucked air temperature (Trs')) after the switch has been made from the cooling operation to the dehumidifying operation. Thus, during the dehumidifying operation, chilling injury to a load inside the container (C) and an increase in the inside temperature of the container (C) can be prevented.

Further, the reference sucked air temperature, on which a variation in the detected sucked air temperature (Trs) is determined, is set to be the stabilized sucked air temperature (Trs'). With the use of the stabilized sucked air temperature (Trs') as the reference value, a determination can be made whether or not the detected sucked air temperature (Trs) has varied along with the inside temperature of the container (C) after the switch from the cooling operation to the dehumidifying operation.

During the dehumidifying operation (specifically, during the second dehumidifying control), the target temperature (Tx) is corrected in accordance with the dehumidifying capacity of the evaporator (25). In this manner, if the temperature of the blown air tends to fall easily during the dehumidifying operation, the temperature of the blown air can be raised. Thus, the temperature inside of the container (C) can be prevented from falling, even if the dehumidifying capacity of the evaporator (25) increases.

Since the lower limit of the target temperature (Tx) is set to be the preset inside temperature (Tsp), an excessive decrease in the temperature of the blown air can be prevented. This prevents an excessive decrease in the inside temperature of the container (C). Thus, chilling injury to a load inside the container (C) can prevented reliably during the dehumidifying operation.

Moreover, in the container refrigeration device (10) of the first embodiment, during the dehumidifying operation (specifically, during the first dehumidifying control), the sucked air which has been sucked from inside of the container (C) can be cooled and dehumidified by the evaporator (25) and heated by the reheat heat exchanger (32). Thus, prevention of a decrease in the inside temperature of the container (C) and dehumidification of the air inside of the container (C) can be achieved.

In addition, in the container refrigeration device of the first embodiment, during the dehumidifying operation (specifically, during the second dehumidifying control), the cooling capacity of the evaporator (25) can be increased along with an increase in the heating capacity of the reheat heat exchanger (32) such that the detected blown air temperature (Tss) becomes equal to the target temperature (Tx), thereby increasing the dehumidifying capacity of the evaporator (25). Thus, reduction of a variation in the inside temperature of the container (C) and increase in the dehumidifying capacity of the evaporator (25) can be achieved.

### <Variation of Operation Control Section>

Optionally, the operation control section (105) may be configured to monitor a superheat degree of the evaporator (25) and to control the opening degree of the expansion valve (76) of the cooling section (18) such that the superheat degree of the evaporator (25) becomes equal to a predetermined target superheat degree. Specifically, if the superheat degree of the evaporator (25) is lower than the target superheat degree, the operation control section (105) may reduce the opening degree of the expansion valve (76) to increase the superheat degree of the evaporator (25). If the superheat degree of the evaporator (25) is higher than the target superheat degree, the operation control section (105) may increase the opening degree of the expansion valve (76) to reduce the superheat degree of the evaporator (25).

Further, when performing the second dehumidifying control, if the discharge pressure of the compressor (21) is equal to the maximum (the limit value), the operation control section (105) may increase the dehumidifying capacity of the evaporator (25) in the following manner. Specifically, when performing the second dehumidifying control, the operation control section (105) may monitor the dehumidification load, and set the target superheat degree in accordance with the dehumidification load such that the target superheat degree increases as the dehumidification load increases. For example, the operation control section (105) may increase the target superheat degree stepwise to "2°C," "5°C," "8°C," "11°C," and "14°C" in this order as the dehumidification load increases.

An increase in the superheat degree of the evaporator (25) leads to a decrease in the suction pressure of the compressor (21) and a decrease in an outlet evaporation temperature of the evaporator (25). This results in an increase in the amount of water that condenses in the evaporator (25). A decrease in the suction pressure of the compressor (21) leads to an increase in the specific volume of the refrigerant that flows through the evaporator (25) and a decrease in the flow rate of the refrigerant that circulates through the refrigerant circuit (16). Consequently, the cooling capacity of the evaporator (25) decreases, and the temperature of the blown air rises. When the temperature of the blown air rises to make the detected blown air temperature (Tss) higher than the target temperature (Tx), the temperature control section (101) performs the first cooling (specifically, increases the opening degree of the suction proportional valve (66) to increase the flow rate of refrigerant that circulates through the refrigerant circuit (16)). In this manner, the cooling capacity of the evaporator (25) increases and the temperature of the blown air falls. As a result, the detected blown air temperature (Tss) falls toward the target temperature (Tx).

Thus, by setting the target superheat degree in accordance with the dehumidification load, the dehumidifying capacity of the evaporator (25) can be set in accordance with the dehumidification load such that the dehumidifying capacity of the evaporator (25) increases as the dehumidification load increases.

By making the temperature control section (101) and the operation control section (105) control the cooling section (18), the flow rate of the refrigerant that circulates through the refrigerant circuit (16) can be increased as the outlet evaporation temperature of the evaporator (25) falls such that the detected blown air temperature (Tss) becomes equal to the target temperature (Tx). Thus, reduction of a variation in the inside temperature of the container (C) and increase in the dehumidifying capacity of the evaporator (25) can be achieved.

### [Second Embodiment]

Next, a container refrigeration device (10) according to a second embodiment will be described. In the container refrigeration device (10) of the second embodiment, a reference sucked air temperature is not set to be a stabilized sucked air temperature (Trs'), but a preset sucked air temperature which is the sum of a preset inside temperature (Tsp) and a predetermined sucked air increment temperature. (In other words, the preset sucked air temperature is a value which is based on the preset value (the preset inside temperature (Tsp)) of the inside temperature of the container (C)). Specifically, after a switch has been made from a cooling operation to a dehumidifying operation, a first correction section (103) lowers a target temperature (Tx) if a detected sucked air temperature (Trs) becomes higher than the preset sucked air temperature. The first correction section (103) raises the target temperature (Tx) if the detected sucked air temperature (Trs) becomes lower than the preset sucked air temperature. In the other respects, the container refrigeration device (10) of the second embodiment operates as in the container refrigeration device (10) of the first embodiment.

Two different reference sucked air temperatures (hereinafter referred to as "first and second reference sucked air temperatures," respectively) may be set. Specifically, a first reference sucked air temperature may be set to sense an increase in the detected sucked air temperature (Trs), and a second reference sucked air temperature may be set to sense a decrease in the detected sucked air temperature (Trs). For example, the first reference sucked air temperature may be set to be a first preset sucked air temperature which is the sum of the preset inside temperature (Tsp) and a first sucked air increment temperature (of, for example, +3.0°C). The second reference sucked air temperature may be set to be a second preset sucked air temperature which is the sum of the preset inside temperature (Tsp) and a second sucked air increment temperature (which is smaller than the first sucked air increment temperature and may be, for example, +0.5°C).

For example, supposing that the first reference sucked air temperature is set to be the first preset sucked air temperature that is the sum of the preset inside temperature (Tsp) and the first sucked air increment temperature (of +3.0°C) (i.e., "Tsp + 3.0°C"); and that the second reference sucked air temperature is set to be the second preset sucked air temperature that is the sum of the preset inside temperature (Tsp) and the second sucked air increment temperature (of +0.5°C) (i.e., "Tsp + 0.5°C"); and that the yet-to-be-corrected target temperature (Tx) is set to be a second preset temperature that is the sum of the preset inside temperature (Tsp) and a target increment temperature (of +0.6°C) (i.e., Tsp + 0.6°C); and that a first correction temperature (Y) representing a negative value is set to be "-0.2°C"; and that the first correction temperature (Y) representing a positive value is set to be "+0.2°C," the first correction section (103) corrects the target temperature (Tx) in the following manner.

After the switch has been made from the cooling operation to the dehumidifying operation, if the detected sucked air temperature (Trs) becomes higher than the first reference sucked air temperature (of Tsp + 3.0°C), the first correction section (103) adds a first correction temperature representing a negative value (of -0.2°C) to the target temperature (Tx). Consequently, the target temperature (Tx) is corrected into "Tsp + 0.6°C - 0.2°C." If the detected sucked air temperature (Trs) after the switch into the dehumidifying operation is still higher than the first reference sucked air temperature (of Tsp + 3.0°C) even after this correction, the first correction section (103) further adds the first correction temperature representing a negative value (of -0.2°C) to the corrected target temperature (Tx). Consequently, the target temperature (Tx) is further corrected into "Tsp + 0.6°C - (0.2°C x 2)."

On the other hand, after a switch has been made from the cooling operation to the dehumidifying operation, if the detected sucked air temperature (Trs) becomes lower than the second reference sucked air temperature (of Tsp + 0.5°C), the first correction section (103) adds the first correction temperature representing a positive value (of +0.2°C) to the target temperature (Tx). Consequently, the target temperature (Tx) is corrected into "Tsp + 0.6°C + 0.2°C." If the detected sucked air temperature (Trs) after the switch into the dehumidifying operation is still lower than the second reference sucked air temperature (of Tsp + 0.5°C) even after this correction, the first correction section (103) further adds the first correction temperature representing a positive value (of +0.2°C) to the corrected target temperature (Tx). Consequently, the target temperature (Tx) is further corrected into "Tsp + 0.6°C + (0.2°C x 2)."

### <Advantages of Second Embodiment>

As can be seen from the foregoing description, by setting the reference sucked air temperature used to sense a variation in the detected sucked air temperature (Trs) to be the preset sucked air temperature (i.e., the sum of the preset inside temperature (Tsp) and the sucked air increment temperature), a determination can be made, by reference to the preset sucked air temperature, whether or the detected sucked air temperature (Trs) has varied along with the inside temperature of the container (C) after the switch has been made from the cooling operation to the dehumidifying operation.

Besides this advantage, the container refrigeration device (10) of the second embodiment has the same or similar effects and functions as/to the container refrigeration device (10) of the first embodiment.

### [Third Embodiment]

Next, a container refrigeration device (10) according to a third embodiment will be described. In the container refrigeration device (10) of the third embodiment, the heating device (17) is not implemented as a reheat heat exchanger (32) but as an electric heater (78). The container refrigeration device (10) of the third embodiment has the same configuration as the container refrigeration device (10) of the first embodiment, except that the following components are omitted from the refrigerant circuit (16) in the container refrigeration device (10) of the third embodiment: namely, the reheat heat exchanger (32) and its associated members (specifically, the first branch pipe (85), the second connection pipe (92), the reheat solenoid valve (70), and the reheat heat exchanger (32)); and the drain pan heater (77) and its associated members (specifically, the first and third connection pipes (91, 93), the heater solenoid valve (71), and the drain pan heater (77)).

### <Electric Heater>

The electric heater (78) is configured such that its heating capacity is variable in response to a control by the controller (100). The electric heater (78) is provided downstream of the evaporator (25) with respect to the direction in which sucked air which has been sucked from inside of the container (C) flows. The electric heater (78) extends substantially parallel to the evaporator (25) in the width direction inside of the container (C).

### <Operation Control Section>

In this example, during the cooling and dehumidifying operations (specifically, during first to third dehumidifying controls), the operation control section (105) controls the electric heater (78) in the following manner. Note that the operation control section (105) changes the modes of operation and changes the modes of control from one of the first to third dehumidifying controls to another as in the first embodiment.

### «Control during Cooling Operation»

During the cooling operation, the operation control section (105) keeps the electric heater (78) at rest. During the cooling operation, as in the first embodiment, the operation control section (105) holds the first on-off valve (35) open, adjusts the opening degree of the expansion valve (76) to be a predetermined opening degree, and basically keeps the compressor (21), the outer fan (24), and the inner fans (26) running.

### «First Dehumidifying Control»

When performing the first dehumidifying control, the operation control section (105) keeps the electric heater (78) in operation. When performing the first dehumidifying control, as in the first embodiment, the operation control section (105) holds the first on-off valve (35) open, adjusts the opening degree of the expansion valve (76) to be a predetermined opening degree, and basically keeps the compressor (21), the outer fan (24), and the inner fans (26) running.

### «Second Dehumidifying Control»

When performing the second dehumidifying control, as in the first dehumidifying control, the operation control section (105) keeps the electric heater (78) in operation, and holds the first on-off valve (35) open. The operation control section (105) also adjusts the opening degree of the expansion valve (76) to be a predetermined opening degree, and basically keeps the compressor (21), the outer fan (24), and the inner fans (26) running. Further, when performing the second dehumidifying control, the operation control section (105) monitors the dehumidification load and sets the heating capacity of the electric heater (78) in accordance with the dehumidification load such that the heating capacity of the electric heater (78) increases as the dehumidification load increases. The minimum of the heating capacity (a variable value) of the electric heater (78) during the second dehumidifying control is higher than the heating capacity (a constant value) of the electric heater (78) during the first dehumidifying control.

### «Third Dehumidifying Control»

When performing the third dehumidifying control, the operation control section (105) keeps the electric heater (78) at rest. When performing the third dehumidifying control, as in the first embodiment, the operation control section (105) holds the first on-off valve (35) open, adjusts the opening degree of the expansion valve (76) to be a predetermined opening degree, and basically keeps the compressor (21), the outer fan (24), and the inner fans (26) running.

### «Operation of Container Refrigeration Device»

Next, it will be described how the container refrigeration device (10) of the third embodiment performs the cooling and dehumidifying operations. The first and second correction sections (103, 104) correct the target temperature (Tx) as in the first embodiment. For the sake of simplicity, in the following description, the second, third, and fourth on-off valves (36, 37, 38) are supposed to be held closed.

### <<Cooling Operation>>

During the cooling operation, the electric heater (78) is at rest, the first on-off valve (35) is held open, and the opening degree of the expansion valve (76) is adjusted to be a predetermined opening degree. The compressor (21), the outer fan (24), and the inner fans (26) are basically kept running. Accordingly, during the cooling operation, the sucked air that has been sucked into the inner storage space (S2) from inside of the container (C) through the air inlet (51) is cooled by the evaporator (25), and then passes through the electric heater (78) which is at rest. Thereafter, the air is blown out through the air outlet (52) and goes back into the inside of the container.

As in the first embodiment, during the cooling operation, the target control section (201) sets the target temperature (Tx) to be the first preset temperature that is equal to the preset inside temperature (Tsp). Accordingly, the temperature control section (101) performs the first cooling and the second cooling such that the detected blown air temperature (Tss) becomes equal to the first preset temperature that is equal to the preset inside temperature (Tsp).

### «Dehumidifying Operation (First Dehumidifying Control)»

When the modes of operation of the container refrigeration device (10) are changed from the cooling operation to the dehumidifying operation, the first dehumidifying control is performed and the electric heater (78) is activated. During the first dehumidifying control, the first on-off valve (35) is held open, the opening degree of the expansion valve (76) is adjusted to be a predetermined degree, and the compressor (21), the outer fan (24), and the inner fans (26) are basically kept running.

During the dehumidifying operation, as in the cooling operation, the refrigerant discharged from the compressor (21) condenses in the condenser (23), expands in the expansion valve (76), and then evaporates in the evaporator (25). Specifically, the refrigerant that is flowing through the evaporator (25) exchanges heat with the air that is passing through the evaporator (25) (i.e., the inside air which has been blown by the inner fans (26), i.e., the sucked air). Consequently, the refrigerant flowing through the evaporator (25) absorbs heat from the air (the sucked air) passing through the evaporator (25) and evaporates. As a result, the air (the sucked air) that is passing through the evaporator (25) is cooled to cause condensation. Thus, the sucked air is dehumidified. On the other hand, when passing through the electric heater (78), the air (i.e., the air that has been cooled and dehumidified by the evaporator (25)) is heated by the electric heater (78).

In this manner, during the dehumidifying operation, the sucked air that has been sucked into the inner storage space (S2) from inside of the container (C) through the air inlet (51) is cooled and dehumidified by the evaporator (25), and then heated by the electric heater (78). Thereafter, the air is blown out through the air outlet (52) and goes back into the inside of the container.

When the modes of operation of the container refrigeration device (10) are changed from the cooling operation to the dehumidifying operation (i.e., when the first dehumidifying control is performed), the target setting section (102) sets the target temperature (Tx) to be the second preset temperature that is the sum of the preset inside temperature (Tsp) and the target increment temperature. Accordingly, the temperature control section (101) performs the first cooling and the second cooling such that the detected blown air temperature (Tss) becomes equal to the second preset temperature that is the sum of the preset inside temperature (Tsp) and the target increment temperature.

With the temperature control performed in this manner, even if the blown air has its temperature raised by being heated by the electric heater (78) to make the detected blown air temperature (Tss) higher than the target temperature (Tx), the first cooling performed by the temperature control section (101) can increase the cooling capacity of the evaporator (25) and lower the temperature of the blown air. Thus, an increase in the temperature of the blown air can be reduced during the dehumidifying operation.

### «Second Dehumidifying Control»

If the inside air of the container (C) still needs to be dehumidified even after having been dehumidified through the first dehumidifying control (that is to say, if the detected sucked air humidity is higher than the target humidity during the first dehumidifying control), the operation control section (105) finishes the first dehumidifying control to start performing the second dehumidifying control. During the second dehumidifying control, the electric heater (78) is activated, the first on-off valve (35) is held open, the opening degree of the expansion valve (76) is adjusted to be a predetermined degree, and the compressor (21), the outer fan (24), and the inner fans (26) are basically kept running.

Further, during the second dehumidifying control, the target temperature (Tx) is set to be the second preset temperature (the sum of the preset inside temperature (Tsp) and the target increment temperature). That is to say, the temperature control section (101) performs the first cooling and the second cooling such that the detected blown air temperature (Tss) becomes equal to the second preset temperature.

Moreover, during the second dehumidifying control, the operation control section (105) sets the heating capacity of the electric heater (78) in accordance with the dehumidification load such the heating capacity of the electric heater (78) increases as the dehumidification load increases. The heating capacity of the electric heater (78) increases as the heat capacity of the electric heater (78) increases. If an increase in the heating capacity of the electric heater (78) causes an increase in the temperature of the blown air to make the detected blown air temperature (Tss) higher than the target temperature (Tx), the temperature control section (101) performs the first cooling to lower the detected blown air temperature (Tss). Consequently, the cooling capacity of the evaporator (25) increases, and the temperature of the blown air falls. As a result, the detected blown air temperature (Tss) falls toward the target temperature (Tx). Further, an increase in the cooling capacity of the evaporator (25) results in an increase in the amount of water that condenses in the evaporator (25). Thus, the dehumidifying capacity of the evaporator (25) increases.

As can be seen, the heating capacity of the electric heater (78) is set in accordance with the dehumidification load, which enables setting the dehumidifying capacity of evaporator (25) in accordance with the dehumidification load such that the dehumidifying capacity of evaporator (25) increases as the dehumidifying load increases.

Further, during the second dehumidifying control, to make the detected blown air temperature (Tss) as high as the target temperature (Tx), the temperature control section (101) and the operation control section (105) can control the cooling section (18) such that the cooling capacity of the evaporator (25) increases as the heating capacity of the electric heater (78) increases, thereby increasing the dehumidifying capacity of the evaporator (25).

### «Third Dehumidifying Control»

If the detected blown air temperature (Tss) rises when the first dehumidifying control is being performed, the operation control section (105) finishes the first dehumidifying control to start performing the third dehumidifying control. During the third dehumidifying control, the electric heater (78) is kept at rest, the first on-off valve (35) is held open, the opening degree of the expansion valve (76) is adjusted to be a predetermined degree, and the compressor (21), the outer fan (24), and the inner fans (26) are basically kept running.

During the third dehumidifying control, the refrigerant discharged from the compressor condenses in the condenser (23), expands in the expansion valve (76), and then evaporates in the evaporator (25), as in the cooling operation. Specifically, the air (sucked air) that is passing through the evaporator (25) exchanges heat with the refrigerant that is flowing through the evaporator (25), and is cooled to cause condensation. In this manner, the sucked air that has been sucked from inside of the container (C) is cooled and dehumidified by the evaporator (25).

Further, during the third dehumidifying control, the target setting section (102) sets the target temperature (Tx) to be the first preset temperature that is equal to the preset inside temperature (Tsp). Accordingly, the temperature control section (101) performs the first cooling and the second cooling such that the detected blown air temperature (Tss) becomes equal to the first preset temperature.

### <Advantages of Third Embodiment>

As can be seen from the foregoing, in the container refrigeration device (10) of the third embodiment, if a switch has been made from the cooling operation to the dehumidifying operation, the target temperature (Tx) is set to be the second preset temperature (i.e., the sum of the preset inside temperature (Tsp) and the target increment temperature) that is higher than the preset inside temperature (Tsp). Therefore, even if the air that has passed through the heating device (17) (the electric heater (78), in this example) is not uniformly heated with respect to the width direction inside of the container (C), the lowest temperature of the blown air with respect to the width direction inside of the container (C) is not allowed to be lower than the preset inside temperature (Tsp). This prevents causing chilling injury to a load inside the container (C).

Further, in the container refrigeration device (10) of the third embodiment, during the dehumidifying operation (specifically, during the first dehumidifying control), the sucked air that has been sucked from inside of the container (C) can be cooled and dehumidified by the evaporator (25) and heated by the electric heater (78). Thus, prevention of a decrease in the inside temperature of the container (C) and dehumidification of the air inside of the container (C) can be achieved.

In addition, in the container refrigeration device of the third embodiment, during the dehumidifying operation (specifically, during the second dehumidifying control), the cooling capacity of the evaporator (25) is increased as the heating capacity of the electric heater (78) increases such that the detected blown air temperature (Tss) becomes equal to the target temperature (Tx), thereby increasing the dehumidifying capacity of the evaporator (25). Thus, reduction of a variation in the inside temperature of the container (C) and increase in the dehumidifying capacity of the evaporator (25) can be achieved.

Besides these advantages, the container refrigeration device (10) of the third embodiment has the same or similar effects and functions as/to the container refrigeration device (10) of the first embodiment.

### [Other Embodiments]

Although the revolution speed of the compressor (21) (specifically, the revolution speed of the compressor motor) is supposed to be constant in the foregoing description, the compressor (21) may be configured such that its revolution speed is variable in response to a control by the controller (100). In that case, the temperature control section (101) may be configured to control the revolution speed of the compressor (21) such that the detected blown air temperature (Tss) becomes equal to the target temperature (Tx). Specifically, during the first cooling, the temperature control section (101) increases the revolution speed of the compressor (21), which allows for increasing the flow rate of the refrigerant that circulates through the refrigerant circuit (16) and increasing the cooling capacity of the evaporator (25). On the other hand, during the second cooling, the temperature control section (101) reduces the revolution speed of the compressor (21), which allows for decreasing the flow rate of the refrigerant that circulates through the refrigerant circuit (16) and reducing the cooling capacity of the evaporator (25).

Note that the embodiments described above may be combined as appropriate. The embodiments described above are merely preferred examples in nature, and are not intended to limit the scope, applications, and use of the present invention.

### INDUSTRIAL APPLICABILITY

As can be seen from the foregoing description, the present invention is useful as a container refrigeration device.

### DESCRIPTION OF REFERENCE CHARACTERS

- 16: Refrigerant Circuit
- 17: Heating Device
- 18: Cooling Section
- 21: Compressor
- 23: Condenser
- 25: Evaporator
- 32: Reheat Heat Exchanger
- 33: Sucked air Temperature Sensor
- 34: Blown Air Temperature Sensor
- 53: Humidity Sensor
- 76: Expansion Valve (Expansion Mechanism)
- 78: Electric Heater
- 101: Temperature Control Section
- 102: Target Setting Section
- 103: First Correction Section
- 104: Second Correction Section
- 105: Operation Control Section
- 201: Target Control Section

## Claims

1. A container refrigeration device comprising:
a cooling section (18) having
a refrigerant circuit (16) which includes a compressor (21), a condenser (23), an expansion mechanism (76), and an evaporator (25) that are sequentially connected together, and through which a refrigerant circulates, and
a heating device (17) provided downstream of the evaporator (25) with respect to a direction in which sucked air that has been sucked from an inside of a container (C) flows,
the cooling section (18) configured to allow the sucked air to pass sequentially through the evaporator (25) and the heating device (17), and then, to be blown into the inside of the container (C),
the container refrigeration device configured to perform a cooling operation in which the heating device (17) is at rest and the sucked air is cooled by the evaporator (25), and a dehumidifying operation in which the sucked air is cooled and dehumidified by the evaporator (25) and then heated by the heating device (17), **characterized in that**
the container refrigeration device further includes
a blown air temperature sensor (34) configured to detect a temperature of blown air which is being blown into the inside of the container (C) after having passed sequentially through the evaporator (25) and the heating device (17),
a temperature control section (101) configured to control, during the cooling and dehumidifying operations, the cooling section (18) such that a detected blown air temperature (Tss) which is a temperature of the blown air detected by the blown air temperature sensor (34) becomes equal to a predetermined target temperature (Tx), and
a target control section (201), where the target control section (201) sets, during the cooling operation, the target temperature (Tx) to be a first preset temperature which is equal to a preset inside temperature (Tsp) that has been determined in advance with respect to an inside temperature of the container (C), and once a switch has been made from the cooling operation to the dehumidifying operation, the target control section (201) sets the target temperature (Tx) to be a second preset temperature which is the sum of the preset inside temperature (Tsp) and a predetermined target increment temperature.

2. The container refrigeration device of claim 1, further comprising:
a sucked air temperature sensor (33) configured to detect a temperature of the sucked air, wherein
after a switch has been made from the cooling operation to the dehumidifying operation, the target control section (201) lowers the target temperature (Tx) if a detected sucked air temperature (Trs) which is the temperature of the sucked air detected by the sucked air temperature sensor (33) becomes higher than a predetermined reference sucked air temperature, and raises the target temperature (Tx) if the detected sucked air temperature (Trs) becomes lower than the reference sucked air temperature.

3. The container refrigeration device of claim 2, wherein
the reference sucked air temperature is set to be a stabilized sucked air temperature (Trs') which is the temperature of the sucked air detected by the sucked air temperature sensor (33) when the cooling operation is in a stabilized state, or to be a preset sucked air temperature which is the sum of the preset inside temperature (Tsp) and a predetermined sucked air increment temperature.

4. The container refrigeration device of any one of claims 1 to 3, wherein
the target control section (201) corrects, during the dehumidifying operation, the target temperature (Tx) in accordance with dehumidifying capacity of the evaporator (25) such that the target temperature (Tx) rises as the dehumidifying capacity of the evaporator (25) increases.

5. The container refrigeration device of any one of claims 2 to 4, wherein
the target control section (201) corrects the target temperature (Tx) such that the target temperature (Tx) becomes equal to or higher than the preset inside temperature (Tsp).

6. The container refrigeration device of any one of claims 1 to 5, wherein
the heating device (17) is implemented as a reheat heat exchanger (32) into which part of the refrigerant discharged from the compressor (21) flows during the dehumidifying operation.

7. The container refrigeration device of claim 6, further comprising:
an operation control section (105) configured to perform a first dehumidifying control or a second dehumidifying control when the dehumidifying operation is being performed, wherein
the first dehumidifying control is performed to allow part of the refrigerant discharged from the compressor (21) to flow into the reheat heat exchanger (32), and
the second dehumidifying control is performed to allow part of the refrigerant discharged from the compressor (21) to flow into the reheat heat exchanger (32) and to control the cooling section (18) such that a discharge pressure of the compressor (21) becomes higher during the second dehumidifying control than during the first dehumidifying control.

8. The container refrigeration device of any one of claims 1 to 5, wherein
the heating device (17) is implemented as an electric heater (78).

9. The container refrigeration device of claim 8, further comprising:
an operation control section (105) configured to perform a first dehumidifying control or a second dehumidifying control when the dehumidifying operation is being performed, wherein
the first dehumidifying control is performed to drive the electric heater (78), and
the second dehumidifying control is performed to drive the electric heater (78) with the heating capacity of the electric heater (78) set to be higher than the heating capacity during the first dehumidifying control.

## Patentansprüche

1. Container-Kühlvorrichtung, umfassend:
einen Kühlabschnitt (18) mit
einem Kältemittelkreislauf (16), der einen Kompressor (21), einen Kondensator (23), einen Expansionsmechanismus (76) und einen Verdampfer (25) aufweist, die nacheinander miteinander geschaltet sind und durch die ein Kältemittel zirkuliert, und
einer Heizvorrichtung (17), die in Bezug auf eine Richtung, in die aus einem Inneren eines Containers (C) angesaugte Ansaugluft strömt, stromabwärts des Verdampfers (25) bereitgestellt ist,
wobei der Kühlabschnitt (18) dazu ausgelegt ist, die Ansaugluft nacheinander durch den Verdampfer (25) und die Heizvorrichtung (17) laufen und anschließend in das Innere des Containers (C) geblasen werden zu lassen,
wobei die Container-Kühlvorrichtung dazu ausgelegt ist, einen Kühlbetrieb auszuführen, bei dem die Heizvorrichtung (17) ruht und die Ansaugluft von dem Verdampfer (25) gekühlt wird, und einen Entfeuchtungsbetrieb, bei dem die Ansaugluft von dem Verdampfer (25) gekühlt und entfeuchtet und anschließend von der Heizvorrichtung (17) erhitzt wird, **dadurch gekennzeichnet, dass**
die Container-Kühlvorrichtung des Weiteren Folgendes aufweist
einen Blasluft-Temperatursensor (34), der dazu ausgelegt ist, eine Temperatur von Blasluft zu erkennen, die in das Innere des Containers (C) geblasen wird, nachdem sie nacheinander den Verdampfer (25) und die Heizvorrichtung (17) durchlaufen hat,
einen Temperaturregelungsabschnitt (101), der dazu ausgelegt ist, den Kühlabschnitt (18) während des Kühl- und Entfeuchtungsbetriebs so zu regeln, dass eine erkannte Blaslufttemperatur (Tss), bei der es sich um eine von dem Blasluft-Temperatursensor (34) erkannte Temperatur der Blasluft handelt, gleich einer vorbestimmten Solltemperatur (Tx) wird, und
einen Sollregelungsabschnitt (201), wobei der Sollregelungsabschnitt (201) während des Kühlbetriebs die Solltemperatur (Tx) auf eine erste voreingestellte Temperatur einstellt, die gleich einer voreingestellten Innentemperatur (Tsp) ist, die im Voraus in Bezug auf eine Innentemperatur des Containers (C) bestimmt wurde, und, sobald eine Umschaltung von dem Kühlbetrieb auf den Entfeuchtungsbetrieb vorgenommen wurde, der Sollsteuerungsabschnitt (201) die Solltemperatur (Tx) auf eine zweite voreingestellte Temperatur einstellt, bei der es sich um die Summe der voreingestellten Innentemperatur (Tsp) und einer vorbestimmten Soll-Inkrementtemperatur handelt.

2. Container-Kühlvorrichtung nach Anspruch 1, des Weiteren umfassend:
einen Ansaugluft-Temperatursensor (33), der dazu ausgelegt ist, eine Temperatur der Ansaugluft zu erkennen, wobei
nachdem eine Umschaltung von dem Kühlbetrieb auf den Entfeuchtungsbetrieb vorgenommen wurde, der Sollregelungsabschnitt (201) die Solltemperatur (Tx) senkt, wenn eine erkannte Ansauglufttemperatur (Trs), bei der es sich um die von dem Ansaugluft-Temperatursensor (33) erkannte Temperatur der Ansaugluft handelt, höher wird als eine vorbestimmte Ansaugluft-Referenztemperatur, und die Solltemperatur (Tx) erhöht, wenn die erkannte Ansauglufttemperatur (Trs) niedriger wird als die Ansaugluft-Referenztemperatur.

3. Container-Kühlvorrichtung nach Anspruch 2, wobei
die Ansaugluft-Referenztemperatur auf eine stabilisierte Ansauglufttemperatur (Trs'), bei der es sich um die von dem Ansaugluft-Temperatursensor (33) erkannte Temperatur der Ansaugluft handelt, eingestellt wird, wenn sich der Kühlbetrieb in einem stabilisierten Zustand befindet, oder auf eine voreingestellte Ansauglufttemperatur, bei der es sich um die Summe der voreingestellten Innentemperatur (Tsp) und einer vorbestimmten Ansaugluft-Inkrementtemperatur handelt.

4. Container-Kühlvorrichtung nach einem der Ansprüche 1 bis 3, wobei
der Sollregelungsabschnitt (201) während des Entfeuchtungsbetriebs die Solltemperatur (Tx) entsprechend der Entfeuchtungskapazität des Verdampfers (25) so korrigiert, dass die Solltemperatur (Tx) ansteigt, wenn die Entfeuchtungskapazität des Verdampfers (25) zunimmt.

5. Container-Kühlvorrichtung nach einem der Ansprüche 2 bis 4, wobei
der Sollregelungsabschnitt (201) die Solltemperatur (Tx) so korrigiert, dass die Solltemperatur (Tx) gleich der oder höher als die voreingestellte Innentemperatur (Tsp) wird.

6. Container-Kühlvorrichtung nach einem der Ansprüche 1 bis 5, wobei
die Heizvorrichtung (17) als ein Nachheizwärmetauscher (32) implementiert ist, in den während des Entfeuchtungsbetriebs ein Teil des aus dem Kompressor (21) ausgelassenen Kältemittels strömt.

7. Container-Kühlvorrichtung nach Anspruch 6, des Weiteren umfassend:
einen Betriebsregelungsabschnitt (105), der dazu ausgelegt ist, eine erste Entfeuchtungsregelung oder eine zweite Entfeuchtungsregelung auszuführen, wenn der Entfeuchtungsbetrieb ausgeführt wird, wobei
die erste Entfeuchtungsregelung ausgeführt wird, um einen Teil des aus dem Kompressor (21) ausgelassenen Kältemittels in den Nachheizwärmetauscher (32) strömen zu lassen, und
die zweite Entfeuchtungsregelung ausgeführt wird, um einen Teil des aus dem Kompressor (21) ausgelassenen Kältemittels in den Nachheizwärmetauscher (32) strömen zu lassen und den Kühlabschnitt (18) so zu regeln, dass ein Auslassdruck des Kompressors (21) während der zweiten Entfeuchtungsregelung höher wird als während der ersten Entfeuchtungsregelung.

8. Container-Kühlvorrichtung nach einem der Ansprüche 1 bis 5, wobei
die Heizvorrichtung (17) als ein elektrischer Heizer (78) implementiert ist.

9. Container-Kühlvorrichtung nach Anspruch 8, des Weiteren umfassend:
einen Betriebsregelungsabschnitt (105), der dazu ausgelegt ist, eine erste Entfeuchtungsregelung oder eine zweite Entfeuchtungsregelung auszuführen, wenn der Entfeuchtungsbetrieb ausgeführt wird, wobei
die erste Entfeuchtungsregelung ausgeführt wird, um den elektrischen Heizer (78) zu betreiben, und
die zweite Entfeuchtungsregelung ausgeführt wird, um den elektrischen Heizer (78) mit der Heizkapazität des elektrischen Heizers (78) höher als die Heizkapazität während der ersten Entfeuchtungsregelung eingestellt zu betreiben.

## Revendications

1. Dispositif de réfrigération pour contenant comprenant :
une section de refroidissement (18) ayant
un circuit de fluide frigorigène (16) qui comprend un compresseur (21), un condenseur (23), un mécanisme d'expansion (76), et un évaporateur (25) qui sont reliés séquentiellement les uns aux autres, et à travers lesquels circule un fluide frigorigène, et
un dispositif de chauffage (17) prévu en aval de l'évaporateur (25) par rapport à une direction dans laquelle s'écoule de l'air aspiré qui a été aspiré de l'intérieur d'un contenant (C),
la section de refroidissement (18) étant conçue pour laisser l'air aspiré passer séquentiellement à travers l'évaporateur (25) et le dispositif de chauffage (17), et être ensuite soufflé à l'intérieur du contenant (C),
le dispositif de réfrigération pour contenant étant conçu pour réaliser une opération de refroidissement dans laquelle le dispositif de chauffage (17) est au repos et l'air aspiré est refroidi par l'évaporateur (25), et une opération de déshumidification dans laquelle l'air aspiré est refroidi et déshumidifié par l'évaporateur (25) et est ensuite chauffé par le dispositif de chauffage (17), **caractérisé en ce que**
le dispositif de réfrigération pour contenant comprend en outre
un capteur de température d'air soufflé (34) conçu pour détecter une température d'air soufflé qui est en train d'être soufflé à l'intérieur du contenant (C) après être passé séquentiellement à travers l'évaporateur (25) et le dispositif de chauffage (17),
une section de commande de température (101) conçue pour commander, pendant les opérations de refroidissement et de déshumidification, la section de refroidissement (18) de telle sorte qu'une température d'air soufflé détectée (Tss) qui est une température d'air soufflé détectée par le capteur de température d'air soufflé (34) devienne égale à une température cible prédéterminée (Tx), et
une section de commande de cible (201), où la section de commande de cible (201) règle, pendant l'opération de refroidissement, la température cible (Tx) pour être une première température préréglée qui est égale à une température intérieure préréglée (Tsp) qui a été déterminée à l'avance en fonction d'une température intérieure du contenant (C), et une fois qu'un passage de l'opération de refroidissement à l'opération de déshumidification a été effectué, la section de commande de cible (201) règle la température cible (Tx) pour être une seconde température préréglée qui est la somme de la température intérieure préréglée (Tsp) et d'une température incrémentielle cible prédéterminée.

2. Dispositif de réfrigération pour contenant selon la revendication 1, comprenant en outre :
un capteur de température d'air aspiré (33) conçu pour détecter une température de l'air aspiré, dans lequel
après qu'un passage de l'opération de refroidissement à l'opération de déshumidification a été effectué, la section de commande de cible (201) diminue la température cible (Tx) si une température d'air aspiré détectée (Trs) qui est la température de l'air aspiré détectée par le capteur de température d'air aspiré (33) devient supérieure à une température de référence prédéterminée d'air aspiré, et élève la température cible (Tx) si la température d'air aspiré détectée (Trs) devient inférieure à la température de référence d'air aspiré.

3. Dispositif de réfrigération pour contenant selon la revendication 2, dans lequel
la température de référence d'air aspiré est réglée pour être une température d'air aspiré stabilisée (Trs') qui est la température de l'air aspiré détectée par le capteur de température d'air aspiré (33) lorsque l'opération de refroidissement est dans un état stabilisé, ou pour être une température d'air aspiré préréglée qui est la somme de la température intérieure préréglée (Tsp) et d'une température incrémentielle prédéterminée d'air aspiré.

4. Dispositif de réfrigération pour contenant selon l'une quelconque des revendications 1 à 3, dans lequel
la section de commande de cible (201) corrige, pendant l'opération de déshumidification, la température cible (Tx) selon la capacité de déshumidification de l'évaporateur (25) de telle sorte que la température cible (Tx) s'élève au fur et à mesure que la capacité de déshumidification de l'évaporateur (25) augmente.

5. Dispositif de réfrigération pour contenant selon l'une quelconque des revendications 2 à 4, dans lequel
la section de commande de cible (201) corrige la température cible (Tx) de telle sorte que la température cible (Tx) devienne égale ou supérieure à la température intérieure préréglée (Tsp).

6. Dispositif de réfrigération pour contenant selon l'une quelconque des revendications 1 à 5, dans lequel
le dispositif de chauffage (17) est mis en oeuvre sous la forme d'un échangeur de chaleur de réchauffage (32) à l'intérieur duquel une partie du fluide frigorigène refoulé depuis le compresseur (21) s'écoule pendant l'opération de déshumidification.

7. Dispositif de réfrigération pour contenant selon la revendication 6, comprenant en outre :
une section de commande d'opération (105) conçue pour réaliser une première commande de déshumidification ou une seconde commande de déshumidification lorsque l'opération de déshumidification est en train d'être réalisée, dans lequel
la première commande de déshumidification est réalisée pour laisser une partie du fluide frigorigène refoulé depuis le compresseur (21) s'écouler dans l'échangeur de chaleur de réchauffage (32), et
la seconde commande de déshumidification est réalisée pour laisser une partie du fluide frigorigène refoulé depuis le compresseur (21) s'écouler dans l'échangeur de chaleur de réchauffage (32) et pour commander la section de refroidissement (18) de telle sorte qu'une pression de refoulement du compresseur (21) soit plus élevée pendant la seconde commande de déshumidification que pendant la première commande de déshumidification.

8. Dispositif de réfrigération pour contenant selon l'une quelconque des revendications 1 à 5, dans lequel
le dispositif de chauffage (17) est mis en oeuvre sous la forme d'un radiateur électrique (78).

9. Dispositif de réfrigération pour contenant selon la revendication 8, comprenant en outre :
une section de commande d'opération (105) conçue pour réaliser une première commande de déshumidification ou une seconde commande de déshumidification lorsque l'opération de déshumidification est en train d'être réalisée, dans lequel
la première commande de déshumidification est réalisée pour entraîner le radiateur électrique (78), et
la seconde commande de déshumidification est réalisée pour entraîner le radiateur électrique (78), la capacité de chauffage du radiateur électrique (78) étant réglée pour être plus élevée que la capacité de chauffage pendant la première commande de déshumidification.
